(19) Europäisches Patentamt
European Patent Office
Office européen des brevets

(11) EP 0 581 065 B1

(12) EUROPEAN PATENT SPECIFICATION

(45) Date of publication and mention of the grant of the patent:
**20.10.1999 Bulletin 1999/42**

(51) Int Cl.[6]: **G03C 5/17**

(21) Application number: **93110842.7**

(22) Date of filing: **07.07.1993**

# (54) Combination of photosensitive elements for use in radiography

Kombination von lichtempfindlichen Elementen für radiographischen Gebrauch

Combinaison d'éléments sensibles à la lumière pour emploi en radiographie

(84) Designated Contracting States:
**DE FR GB IT**

(30) Priority: **28.07.1992 IT MI921830**

(43) Date of publication of application:
**02.02.1994 Bulletin 1994/05**

(73) Proprietor: **Imation Corp.**
**St. Paul, Minnesota 55164-0898 (US)**

(72) Inventors:
- **Cavallo, Elio**
  **I-17016 Ferrania (Savona) (IT)**
- **Malfatto, Pierfiore**
  **I-17016 Ferrania (Savona) (IT)**
- **Pesce, Sergio**
  **I-17016 Ferrania (Savona) (IT)**
- **Torterolo, Renzo**
  **I-17016 Ferrania (Savona) (IT)**

(74) Representative: **Allaix, Roberto et al**
**Office of Intellectual Property Counsel**
**3M ITALIA S.p.A.**
**Viale Martiri della Libertà, 57**
**17016 Ferrania (Savona) (IT)**

(56) References cited:
**EP-A- 0 350 883** **EP-A- 0 384 753**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 581 065 B1

## Description

## FIELD OF THE INVENTION

The present invention relates to a combination of photosensitive elements for use in radiography and to a combination of a fluorescent phosphor screen pair and a double-side coated silver halide radiographic element for use in medical radiography, preferably for chest diagnostic imaging.

## BACKGROUND OF THE INVENTION

In radiography, and particularly in medical radiography, light-sensitive elements having silver halide emulsion layers coated on both faces of a transparent support (called double-side coated or duplitized silver halide elements) are used. Said double coated silver halide elements are generally used in combination with fluorescent phosphor screens in order to reduce the X radiation exposure necessary to obtain the required image. Generally, one fluorescent phosphor screen is used in association with each silver halide emulsion layer of the double coated element. The silver halide emulsions used in the double coated element are sensitive to a region of the electromagnetic spectrum corresponding to the wave length of the light emitted by the phosphor materials used in the fluorescent phosphor screens, thus obtaining a significant amplification factor.

The quality of the image obtained upon X radiation exposure of said screen pair and double coated silver halide element combination and development of said double coated silver halide element is negatively affected by crossover exposure. Crossover exposure, which causes a reduction in image sharpness, occurs in double coated silver halide elements when light emitted by one fluorescent phosphor screen passes through the adjacent silver halide emulsion layer and, the light having been spread by the support, imagewise exposes the silver halide emulsion layer on the opposite face of the support.

The crossover exposure causes poor definition even if light-sensitive elements are used which employ reduced silver halide coverages to lower the costs or increase the processing speed of the element. In fact, the decrease of the emulsion turbidity increases the amount of light available for crossover and therefore worsens the image.

To reduce the crossover exposure, dyes or pigments can be used within the radiographic element. The absorption of said dyes or pigments is in a region of the electromagnetic spectrum corresponding to the wavelength of the light emitted by the fluorescent phosphor screens. The dyes or pigments absorb some of the light emitted by the fluorescent phosphor screen so that imaging of a silver halide emulsion layer by the opposite screen is reduced by absorbance of the light from the opposite screen by the anticrossover dyes or pigments. These dyes or pigments are eliminated during the photographic developing, fixing and washing process of the exposed material; they can be for instance washed away or, more preferably, bleached while processing the radiographic element.

The dyes can be incorporated in any layer of the light-sensitive element: in the emulsion layer, in an intermediate layer between the emulsion and the base, or in the subbing layer of the support base. It is preferred to incorporate the dyes in a layer different from that containing the emulsion to avoid possible desensitization phenomena. Since 1978, Minnesota Mining and Manufacturing Company has sold a radiographic element under the name of 3M Trimax™ Type XUD X-Ray Film to be used in combination with 3M Trimax™ Intensifying Screens. That radiographic element comprises a transparent polyester base, each surface of which has a silver halide emulsion layer sensitized to the light emitted by the screens. Between the emulsion and the base is a gelatin layer containing water-soluble acid dyes, which dyes can be decolorized during processing and have an absorption in a region of the electromagnetic spectrum corresponding to the wavelength of the light emitted by the screens and to the spectral sensitivity of the emulsion. The dyes are anchored in the layer by means of a basic mordant consisting of polyvinylpyridine.

In the practical solution of reducing the crossover exposure by using a mordanted dye layer (as described for instance in the European Patent Application 101,295), some problems are created which up to now have not yet been solved properly. In fact, the improvement of image definition involves not only a natural decrease of the light-sensitive element sensitivity caused by the absorption of the transmitted light which otherwise would take part in the formation of a part of the image, but also the possibility of desensitization phenomena due to the migration of dye not firmly mordanted in the silver halide emulsion layer. There is also a problem with residual stain even after processing, the retention of significant quantities of thiosulfate from the fixing bath which causes image yellowing upon long-time storage on shelf, and lengthening of the drying times after processing because of element thickening.

Some approaches already have been suggested to reduce crossover, as reported hereinafter.

US Patent 3,923,515 discloses a relatively lower speed silver halide emulsion between the support and a higher speed silver halide emulsion layer to reduce crossover.

US Patent 4,639,411 discloses a photographic element, to be used with blue emitting intensifying screens, having reduced crossover, said element comprising coated on both sides of a transparent support a blue sensitive silver halide emulsion layer and, interposed between the support and the emulsion layer, a blue absorbing layer comprising bright yellow silver iodide grains of a specific crystal structure.

Japanese Patent Application 62-52546 discloses a radiographic element of improved image quality comprising coated on both sides of a transparent support a light sensitive silver halide emulsion layer and, interposed between the support and the emulsion layer, a layer containing water insoluble metal salt particles having adsorbed on their surface a dye. Said dye has a maximum absorption within the range of ± 20 nm of the maximum absorption of said silver halide and corresponds to the light emitted by intensifying screens. Silver halides are disclosed as preferred metal salt particles.

Japanese Patent Application 62-99748 discloses a radiographic element of improved image quality comprising coated on both sides of a transparent support a light-sensitive silver halide emulsion layer and, interposed between the support and the emulsion layer, a silver halide emulsion layer having substantially no light-sensitivity.

The approaches of using light-insensitive silver halide layers as anticrossover layers interposed between the support and the light-sensitive silver halide emulsion layers, although preferred to using dyes or pigments, encounter some problems such as the increase of silver coverage and bad bleaching characteristics in photographic processing (residual stain).

The following are additional documents illustrating the state of the art.

FR 787,017 discloses a radiographic element comprising silver halide emulsion layers of different color sensitivity to be combined with intensifying screens emitting radiation to which the silver halides are sensitive. The purpose of this patent is to obtain a total use of radiation.

BE 757,815 discloses a combination of a silver halide element and an intensifying screen comprising a fluorescent compound emitting light of wavelength less than 410 nm.

US 4,130,428 discloses a combination of two fluorescent screens and a double coated silver halide element wherein the maximum emission of the screens is in the wavelength range of 450-570 nm and silver halide layers are sensitive to light in the same wavelength range.

US 3,795,814, 4,070,583 and GB 2,119,396 disclose rare earth oxyhalide phosphors activated with terbium and/or thulium employed in fluorescent screens having UV emission.

FR 2,264,306 discloses a combination of a silver halide element and fluorescent screen comprising a rare earth activated rare earth oxyhalide phosphor having its maximum emission in the wavelength range of 400-500 nm.

EP 88,820 discloses a radiographic fluorescent screen comprising a first blue emitting phosphor layer and a second green emitting phosphor layer to be combined with a silver halide element having spectral sensitivity in the blue-green region ("ortho-type" elements).

JP 60175-000 discloses a combination of a double coated silver halide element and a screen pair wherein the fluorescent layers of the two screens have different wavelength region emissions and each screen comprises an organic dye to absorb the light emitted by the opposite screen.

EP 232,888 discloses a combination of a double coated silver halide element and a pair of front and back intensifying screens wherein said front and back screens, emitting light in the same wavelength region, have different modulation transfer functions to be used in low energy radiography.

US 4,480,024 discloses the combination of a silver halide photothermographic element and a rare-earth intensifying screen which are uniquely adapted to one another for the purpose of industrial radiographic imaging. The photothermographic element is dye-sensitized to the spectral emission of the screen and the combination of screen and element has an amplification factor greater or equal to at least 50. According to this invention preferably a single screen is used in combination with a single-side coated photothermographic element, or double screens with either single-side or a double-side coated photothermographic elements, the latter without any significant benefit and at increased cost of film.

EP 276,497 discloses means for reducing crossover, which comprises a reflective support interposed between the emulsion layer units during imaging.

Crossover reduction in the 15 to 22 percent range has been described in US 4,425,425 and 4.425,426, cited above, by employing double coated radiographic elements containing spectrally sensitized high aspect ratio or thin intermediate aspect ratio tabular grain silver halide emulsions.

Crossover reduction of less than about 5 percent has been disclosed in US 4,803,150 by combining the teachings of US 4,425,425 and 4,425,426 with a processing solution decolorizable microcrystalline dye located between at least one of the silver halide units and the transparent film support.

US 4,900,652 adds to the teachings of US 4,803,150, cited above, specific selections of gelatin coating coverages in the emulsion and dye containing layers to allow the low crossover radiographic elements to emerge dry from a conventional rapid acces processor in less than 90 seconds with the crossover reducing microcrystalline dye decolorized.

EP 350,883 discloses a technique for crossover reduction in which silver halide emulsion layers having different color sensitivities are provided on the opposite sides of a transparent support, and X-ray fluorescent intensifying screens having emission spectra corresponding to the respective color sensitivities are used.

Although in recent years improvements in various performances of silver halide radiographic elements have been obtained, specific medical diagnostic imaging systems still require further improvements. One of these systems can be illustrated by chest radiography. In a typical chest radiography, superior imaging details must be produced over a wide range of exposure levels within a single image, such as is required for succesfully capturing both heart and lung image details within a single radiographic image, even though the X radiation absorption in the heart area is about ten times greater than that in the lung area. Therefore, when most double coated radiographic elements are exposed to provide an optimum contrast image of the lungs, no visually discernable contrast in the image of the heart is obtained. This is because the radiographic element receives in the heart area only about one tenth the exposure it receives in the lung area. In the art of chest radiography, X ray images providing visually discernable features in both the heart and lung image areas are attempted to be obtained by using extended latitude radiographic elements. Extended latitude radiographic elements typically employ polydispersed silver halide emulsions to provide lower average contrasts and a wider range of exposures separating minimum and maximum density exposures. Said extended latitude radiographic elements, however, do not provide the desired sensitometric curve necessary to obtain visually useful imaging details in both heart and lung areas. For example, EP 126,664 describes a radiographic material having a characteristic curve whose gamma between optical densities of 0.50 and 1.50 is 2.7 to 3.3 and gamma between optical densities of 2.00 and 3.00 is 1.5 to 2.5, said material having a wide exposure latitude to make possible the production of images having high diagnosis ability. One other approach relates to the use of radiographic elements having two different emulsion layers coated on each side of the support. An example of this solution can be found in FR 1,103,973, wherein the use of screens having a light emission ratio of from 1:1 to 1.5:1 (back screen:front screen) in combination with a radiographic element having coated thereon a high contrast back emulsion and a low contrast front emulsion is suggested. A combination of screens having a light emission ratio higher than 1.5:1 and radiographic elements having emulsion layers with the same gradation is also suggested. Other patents disclose the use of double coated radiographic elements having emulsion layers with different contrast or sensitivity. For example, DE 1,017,464 discloses a double coated radiographic element having coated thereon a first emulsion with a high sensitivity and low contrast and a second emulsion with low sensitivity and high contrast, FR 885,707 discloses a double coated radiographic material having coated thereon a first high sensitivity emulsion and a second high contrast emulsion, and FR 875,269 discloses a radiographic assembly comprising several radiographic films or papers, each having a different sensitivity and/or contrast relative to the others, in order to obtain separate and different images of the same object with a single exposure. A similar approach is disclosed in US 4,994,355, claiming a double coated radiographic element having emulsion layers with different contrast, in US 4,997,750, claiming a double coated radiographic element having emulsion layers with different sensitivity and in US 5,021,327, claiming a radiographic assembly wherein the back screen and the emulsion layer have a photicity at least twice that of the front screen and emulsion layer (the photicity being defined as the integrated product of screen emission and emulsion sensitivity), all these patents requiring the use of a dye underlayer to reduce crossover to less than 10 percent. Research Disclosure, December 1973, Vol. 116, Item 11620 discloses a radiographic material which shows different contrast when observed with or without a green filter, respectively.

The quantity of silver halide radiographic materials processed for medical diagnoses has been increased year by year, resulting in a demand for a still greater increase in the speed of processing, i.e, increasing the number of radiographic sheets processed within a predetermined period of time. Using automatic processing apparatus, the processing of radiographic films can be speeded up. However, a lot of problems occur with the rapid processing of radiographic films, such as insufficient densities (decrease in photographic speed, contrast and maximum density), insufficient fixation of non image silver halide, insufficient washing of film, and insufficient drying of film. It is known that reducing the thickness of the photographic component layers which constitute the photographic material, hardening the photographic component layers to a certain extent, and reducing the total amount of silver halide to be used make it possible to process a radiographic material at a high speed, however when a radiographic material thus constituted is processed by super rapid processing deteriorated image qualities have been obtained.

Furthermore, in double coated radiographic materials increased amounts of sensitizing dyes are used to improve image definition and photographic speed. As a result, super rapid processing of said materials can cause dye-stain defects due to considerable amount of dye remaining in the material after processing.

Accordingly, there is still the demand for radiographic systems which meet the diagnostic needs of medical radiologists in the imaging applications in which the X ray radiation absorption capabilities of the object being examined differ over a wide range, and offer further advantages of high-sensitivity, low crossover and high-image quality by super rapid processing.

## SUMMARY OF THE INVENTION

The present invention provides a combination of a pair of radiographic fluorescent screens and a double coated silver halide unit radiographic element. Each screen is arranged adjacent to each silver halide layer and each screen is capable of imagewise emitting radiation to which the adjacent silver halide unit is sensitive when imagewise

exposed to X-radiation. One fluorescent screen emits a first radiation in a first wavelength region of the electromagnetic spectrum and the other fluorescent screen emits a second radiation in a second wavelength region of the electromagnetic spectrum, and each silver halide unit is substantially insensitive to the radiation emitted by the opposite screen. The combination is characterized in that the two silver halide layer units have different sensitometric characteristics (speed and contrast), in particular the two silver halide emulsion layer units have a difference of contrast, based on density measurements at 0.25 and 1.00 above minimum density, of at least 0.5, and a difference in speed, measured at density 0.5 above minimum density, of at least 0.5 logE.

In particular, the present invention provides for a combination of a pair of front and back radiographic fluorescent screens and a double coated silver halide radiographic element, wherein said front screen comprises a non-actinic radiation, preferably green radiation, emitting phosphor and is arranged adjacent to a front silver halide emulsion layer unit comprising a silver halide emulsion spectrally sensitized to the light emitted by said front screen, and said back screen comprises an actinic radiation, preferably UV radiation, emitting phosphor and is arranged adjacent to a back silver halide emulsion layer unit comprising a silver halide emulsion unsensitized to the visually observable regions of the electromagnetic spectrum, characterized in that the two silver halide emulsion layer units have a difference of contrast, based on density measurements at 0.25 and 1.00 above minimum density, of at least 0.5, and a difference in speed, measured at density 0.5 above minimum density, of at least 0.5 logE.

The combination of screen pair and double coated silver halide element for use in radiography according to the present invention provides images having superior image quality, particularly less crossover, as compared to conventional radiographic screen pair and double silver halide element combinations without causing negative effects, such as significant loss of sensitivity, residual stain, image instability upon storage, excessive element thickening and increased silver coverage. The combination may be used in medical radiography for chest diagnostic imaging.

## BRIEF DESCRIPTION OF THE DRAWINGS

Figure 1 is a schematic diagram of a radiographic element and screen pair combination of the present invention.

Figures 2 and 4 are graphs illustrating emission spectra of radiographic fluorescent screens of the present invention.

Figures 3 and 5 are graphs illustrating spectral sensitivity of a double-side coated silver halide radiographic element of the present invention.

Figures 6 and 7 are graphs illustrating sensitometric curves of radiographic double coated silver halide element and screen pair combinations.

## DETAILED DESCRIPTION OF THE INVENTION

Figure 1 shows in greater detail a combination of the screen pair and the double silver halide element of this invention. The combination comprises three separate photosensitive elements: a double coated silver halide radiographic element 10, a front screen 21 and a back screen 20.

As shown, the double coated silver halide radiographic element 10 comprises a support 11 and coated on its opposite faces are the subbing layers 12 and 13. A front silver halide emulsion layer 15 is coated over the subbing layer 13 and a back silver halide emulsion layer 14 is coated over the subbing layer 12 on the opposite face of the support. Protective layers 16 and 17 are coated over the silver halide emulsion layers 14 and 15, respectively.

As shown, the front radiographic fluorescent screen 21 comprises a support 29, a reflective layer 27, a fluorescent phosphor layer 25 and a protective layer 23. Similarly, the back radiographic fluorescent screen 20 comprises a support 28, a reflective layer 26, a fluorescent phosphor layer 24 and a protective layer 22.

In practical use, the screen pair and the silver halide element are compressed in a radiographic cassette with the front screen arranged adjacent and in close contact with the front silver halide emulsion layer and the back screen is arranged adjacent and in close contact with the back silver halide emulsion layer. An imagewise distribution of X radiation enters the screen pair and silver halide element combination through the front screen support 29 and reflective layer 27 and passes the front screen fluorescent phosphor layer 25. A portion of the X radiation is absorbed in the phosphor layer 25. The remaining X radiation passes through the protective layers 23 and 17. A small portion of the X radiation is absorbed in the front silver halide emulsion layer 15, thereby contributing directly to the formation of a latent image in said front silver halide emulsion layer 15. The major portion of the X radiation passes through the subbing layer 13, the support 11 and the subbing layer 12. Again, a small portion of the X radiation is absorbed in the back silver halide emulsion layer 14, thereby contributing directly to the formation of a latent image in said back silver halide emulsion layer 14. Again, the major portion of the X radiation passes through the protective layers 16 and 22 and is absorbed in the back fluorescent phosphor layer 24. The imagewise X radiation is principally absorbed in the fluorescent phosphor layers 24 and 25, thereby producing the emission of longer wavelength radiation. According to

the present invention, the first radiation emitted by the front fluorescent phosphor layer 25 exposes the adjacent front silver halide emulsion layer 15, and the second radiation emitted by the back fluorescent phosphor layer 24 exposes the adjacent back silver halide emulsion layer 14. The silver halide emulsions are substantially insensitive to the radiation emitted by the opposite fluorescent phosphor layer. Said radiation emitted by a fluorescent phosphor layer passing to at least some extent beyond the adjacent silver halide emulsion layer penetrates the subbing layers and the support to expose the opposite silver halide emulsion layer. This fact, while increasing to some extent the speed of the screen pair and silver halide element combination, would have the effect of impairing the image sharpness by crossover exposure. The terms "actinic" and "non-actinic" radiation according to the present invention are used to indicate, respectively, radiation of wavelength shorter than 500 nm (ultraviolet and blue radiation), preferably from 300 to less than 500 nm, and radiation of wavelength from 500 nm upwards (green, red and Infrared radiation), preferably from 500 to 1200 nm. The term "insensitive" as used herein, describes primary or intrinsic insensitivity of the silver halide grain emulsion (or layer including it) to a certain range of wavelengths. Accordingly, the latent image formed by radiation (preferably comprised between 300 and 1200 nm) exposure in each silver halide emulsion layer is primarily formed by exposure to the radiation emitted by the adjacent fluorescent phosphor layer, with no significant contribution by opposite screen. Preferably, the radiation exposure necessary to produce a Dmax of 1.0 on said front silver halide layer will produce a Dmax of less than 0.2 on the back silver halide emulsion layer under the same development conditions. Conversely, an exposure at the lambda max of the back layer that produces a Dmax of 1.0 will produce a Dmax of less than 0.2 on the front layer.

The terms "front" and "back" in the present invention are used to distinguish the different elements of the unsymmetrical screen pair and double coated silver halide element combination not their position relating to exposing X radiation source. Accordingly, X radiation may enter the unsymmetrical screen pair and double-side coated silver halide element through either the front fluorescent phosphor screen or the back fluorescent phosphor screen.

The term "silver halide element" in the present invention includes silver halide "photographic" elements which use liquid development to produce the final image. In photographic silver halide elements, exposure of the silver halide to radiation produces small clusters of silver ions. The imagewise distribution of these clusters is known in the art as the latent image. This latent image generally is not visible by ordinary visual means and the light-sensitive element must be further processed in order to produce a visual image. This visual image is produced by the catalytic reduction of silver which is in catalytic proximity to the specks of the latent image.

According to the present invention, the double coated radiographic element is characterized in that the two silver halide emulsion layer units, in addition to be insensitive to radiation emitted by the opposite screen, have a difference of average contrast, based on density measurements at 0.25 and 1.00 above minimum density, of at least 0.5, and a difference in speed, measured at density 0.5 above minimum density, of at least 0.5 logE. The average contrast is the density difference divided by the log of the difference in exposure levels at the two density reference points on the characteristic curve, where the exposure levels are meter-candle-seconds. The contrast and the speed of each silver halide emulsion layer unit are determined with one silver halide emulsion unit replacing the second silver halide emulsion unit to provide an arragement with the first silver halide emulsion unit present on one side of the transparent support. While the best choice of average contrast and speed differences between the first and the second emulsion layer units can differ widely, depending upon the application to be served, in most instances the first and the second emulsion layer units exhibit an average contrast difference in the range of from 0.5 to 2.0, optimally from 1.0 to 1.5, and a speed difference in the range of from 0.5 to 2.0 logE, optimally from 0.6 to 1.2 logE. In the present invention, it is preferred that the lower average contrast silver halide emulsion unit exhibits a speed which is higher than that of the higher average contrast silver halide emulsion unit, since the lower average contrast emulsion unit is normally relied upon to provide image details in areas receiving the least exposure to X-radiation. While the speed and average contrast characteristic curve reference points have been arbitrarily selected, the selections are typical of those employed in the art.

Accordingly, the present invention relates to a combination of photosensitive elements for use in radiography comprising two separate front and back X-ray fluorescent screens and a silver halide radiographic element comprising a support base and front and back silver halide emulsion layer units each coated on one surface of said support, wherein said front screen is arranged adjacent to said front silver halide emulsion layer unit and said back screen is arranged adjacent to said back silver halide emulsion layer unit, and wherein

1) said front screen comprises a first radiation emitting phosphor and said front silver halide emulsion layer unit comprises silver halide grains sensitive to said first radiation emitted by said front screen,
2) said back screen comprises a second radiation emitting phosphor and said back silver halide emulsion layer unit comprises silver halide grains sensitive to said second radiation emitted by said back screen,
3) said first radiation emitted by said front screen has a wavelength which differs from said second radiation emitted by said back screen by at least 50 nm,
4) said front silver halide emulsion layer unit is substantially insensitive to said second radiation emitted by said

back screen, and

5) said back silver halide emulsion layer unit is substantially insensitive to said first radiation emitted by said front screen,

the difference in wavelength region of said first and second radiation and the insensitivity of each silver halide emulsion layer unit to radiation emitted by opposite screen being such to reduce crossover exposure of at least 10 percent when compared with a symmetrical combination of a pair of green light emitting fluorescent screens and a double coated green sensitized silver halide emulsion radiographic element,

characterized in that the two silver halide emulsion layer units have a difference of average contrast, based on density measurements at 0.25 and 1.00 above minimum density, of at least 0.5, and a difference in speed, measured at density 0.5 above minimum density, of at least 0.5 logE.

According to a preferred embodiment of this invention, in the combination of a pair of front and back radiographic fluorescent screens and a double coated silver halide radiographic element, said front screen comprises a non-actinic radiation, preferably green light, emitting phosphor and is arranged adjacent to a front silver halide emulsion layer unit comprising a silver halide emulsion spectrally sensitized to the radiation emitted by said front screen, and said back screen comprises an actinic radiation, preferably UV light, emitting phosphor and is arranged adjacent to a back silver halide emulsion layer unit comprising a silver halide emulsion insensitive to the visually observable regions of the electromagnetic spectrum (that is 410 to 750 nm).

Preferably, the phosphors used in the front fluorescent screens applied in the present invention emit radiation in the green or red region of the visible spectrum. More preferably, said phosphors emit radiation in the green region of the visible spectrum. Most preferably, said phosphors emit radiation having more than about 80% of its spectral emission above 480 nm and its maximum emission in the wavelength range of 530-570 nm. Green emitting phosphors which may be used in the front fluorescent screens used in the present invention include rare earth activated rare earth oxysulfide phosphors of at least one rare earth element selected from yttrium, lanthanum, gadolinium and lutetium, rare earth activated rare earth oxyhalide phosphors of the same rare earth elements, a phosphor composed of a borate of the above rare earth elements, a phosphor composed of a phosphate of the above rare earth elements and a phosphor composed of tantalate of the above rare earth elements. These rare earth green emitting phosphors have been extensively described in the patent literature, for example in US Patents 4,225,653, 3,418,246, 3,418,247, 3,725,704, 3,617,743, 3,974,389, 3,591,516, 3,607,770, 3,666,676, 3,795,814, 4,405,691, 4,311,487 and 4,387,141. These rare earth phosphors have a high X-ray stopping power and high efficiency of light emission when excited with X radiation and enable radiologists to use substantially lower X radiation dosage levels. Particularly suitable phosphors for use in the front fluorescent screens used in the present invention are terbium or terbium-thulium activated rare earth oxysulfide phosphors represented by the general formula (I)

$$(Ln_{1\text{-}a\text{-}b}, Tb_a, Tm_b)_2O_2S \qquad (I)$$

wherein Ln is at least one rare earth element selected from lanthanum, gadolinium and lutetium, and a and b are numbers such as to meet the conditions $0.0005 \le a \le 0.09$ and $0 \le b \le 0.01$, respectively, and terbium or terbium-thulium activated rare earth oxysulfide phosphors represented by the general formula (II)

$$(Y_{1\text{-}c\text{-}a\text{-}b}, Ln_c, Tb_a, Tm_b)_2O_2S \qquad (II)$$

wherein Ln is at least one rare earth element selected from lanthanum, gadolinium and lutetium, and a, b and c are numbers such as to meet the conditions $0.0005 \le a \le 0.09$, $0 \le b \le 0.01$ and $0.65 \le c \le 0.95$, respectively.

Figure 2 shows an emission spectrum of a front fluorescent screen comprising a fluorescent layer of $(Gd_{1\text{-}0.05}, Tb_{0.05})_2O_2S$ phosphor as green emitting phosphor, expressed as fluorescence (F) versus wavelengths (nm).

The front silver halide emulsion layer, to be arranged according to this invention adjacent to the front fluorescent screen, comprises silver halide grains which are optically sensitized to the spectral region of the radiation emitted by the screens, preferably to a spectral region of an interval comprised within 25 nm from the wavelength of the maximum emission of the screen, more preferably within 15 nm, and most preferably within 10 nm. The silver halide grains of the front silver halide layer have adsorbed on their surface spectral sensitizing dyes that exhibit absorption maxima in the regions of the visible spectrum where the front fluorescent screen emits. Preferably,spectral sensitizing dyes according to this invention are those which exhibit J aggregates if adsorbed on the surface of the silver halide grains and a sharp absorption band (J-band) with a bathocromic shifting with respect to the absorption maximum of the free dye in aqueous solution. Spectral sensitizing dyes producing J aggregates are well known in the art, as illustrated by F. M. Hamer, Cyanine Dyes and Related Compounds, John Wiley and Sons, 1964, Chapter XVII and by T. H. James,

The Theory of the Photographic Process, 4th edition, Macmillan, 1977, Chapter 8.

In a preferred form, J-band exhibiting dyes are cyanine dyes. Such dyes comprise two basic heterocyclic nuclei joined by a linkage of methine groups. The heterocyclic nuclei preferably include fused benzene rings to enhance J aggregation.

The heterocyclic nuclei are preferably quinolinium, benzoxazolium, benzothiazolium, benzoselenazolium, benzimidazolium, naphthoxazolium, naphthothiazolium and naphthoselenazolium quaternary salts.

J-band type dyes preferably used in the present invention have the following general formula (III):

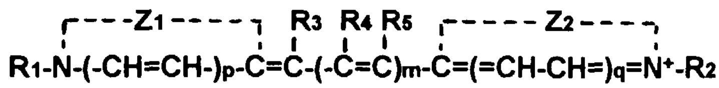

$(A^-)_k$ $(B^-)l$ (III)

wherein $Z_1$ and $Z_2$ may be the same or different and each represent the necessary elements to complete a cyclic nucleus derived from basic heterocyclic nitrogen compounds, such as oxazoline, oxazole, benzoxazole, naphthoxazoles (e.g. naptho-{2,1-d}-oxazole, naptho-{2.3-d}-oxazole and naphtho-{1,2-d}-oxazole), thiazoline, thiazole, benzothiazole, naphthothiazoles (e.g. naphtho-{2,1-d}-thiazole), thiazolequinolines (e.g. thiazole-(4,5-b}-quinoline), selenazoline, selenazole, benzoselenazole, naphthoselenazoles (e.g. naphtho-{1,2-d}-selenazole), 3H-indole (e.g. 3,3-dimethyl-3H-indole), benzoindoles (e.g. 1,1-dimethylbenzoindole), imidazoline, imidazole, benzimidazole, naphthoimidazoles (e.g. naphtho-{2,3-d}-imidazole), pyridine and quinoline, which nuclei may be substituted in the ring with one or more substituents such as hydroxy groups, halogens (e.g. fluorine, bromine, chlorine and iodine), alkyl or substituted alkyl groups (e.g. methyl, ethyl, propyl, isopropyl, butyl, octyl, dodecyl, 2-hydroxyethyl, 3-sulfopropyl, carboxymethyl, 2-cyanoethyl and trifluoromethyl), aryl or substituted aryl groups (e.g. phenyl, 1-naphthyl, 2-naphthyl, 4-sulfophenyl, 3-carboxyphenyl and 4-biphenyl), aralkyl groups (e.g., benzyl and phenethyl), alkoxy groups (e.g., methoxy, ethoxy, and isopropoxy), aryloxy groups (e.g., phenoxy and 1--naphthoxy), alkylthio groups (e.g., ethylthio and methylthio), arylthio groups (e.g., phenylthio, p-tolylthio, and 2-naphthylthio), methylenedioxy, cyano, 2-thienyl, styryl, amino or substituted amino groups (e.g., anilino, dimethylanilino, diethylanilino, and morpholino), acyl groups (e.g., acetyl and benzoyl), and sulfo groups,

$R_1$ and R2 can be the same or different and represent alkyl groups, aryl groups, alkenyl groups, or aralkyl groups, with or without substituents, (e.g., carboxymethyl, 2-hydroxyethyl, 3-sulfopropyl, 3-sulfobutyl, 4-sulfobutyl, 2-methoxyethyl, 2-sulfatoethyl, 3-thiosulfatoethyl, 2-phos-phonoethyl, chlorophenyl, and bromophenyl),

$R_3$ represents a hydrogen atom,

$R_4$ and $R_5$ can be the same or different and represent a hydrogen atom or a lower alkyl group of from 1 to 4 carbon atoms,

p and q are 0 or 1, except that both p and q preferably are not 1,

m is 0 or 1 except that when m is 1 both p and q are 0 and at least one of $Z_1$ and $Z_2$ represents imidazoline, oxazoline, thiazoline, or selenazoline,

A is an anionic group,

B is a cationic group, and

k and l may be 0 or 1, depending on whether ionic substituents are present. Variants are, of course, possible in which $R_1$ and $R_3$, $R_2$ and $R_5$, or $R_1$ and $R_2$ together represent the atoms necessary to complete an alkylene bridge.

In the most preferred form of this invention, wherein the phosphors of the front fluorescent screen are rare earth phosphors emitting in the green region of the visible spectrum, said optical sensitizing dyes adsorbed on said silver halide grains of the front silver halide layer are represented by the following general formula (IV):

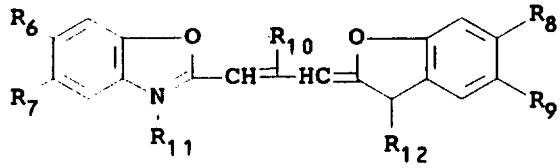

$(X^-)_{n-1}$ (IV)

wherein

$R_{10}$ represents a hydrogen atom or a lower alkyl group of from 1 to 4 carbon atoms (e.g. methyl, and ethyl),

$R_6$, $R_7$, $R_8$ and $R_9$ each represents a hydrogen atom, a halogen atom (e.g. chloro, bromo, iodo, and fluoro), a hydroxy group, an alkoxy group (e.g. methoxy and ethoxy), an amino group (e.g. amino, methylamino, and dimethylamino), an acylamino group (e.g. acetamido and propionamido), an acyloxy group (e.g. acetoxy group), an alkoxycarbonyl group (e.g. methoxycarbonyl, ethoxycarbonyl, and butoxycarbonyl), an alkyl group (e.g. methyl, ethyl, and isopropyl), an alkoxycarbonylamino group (e.g. ethoxycarbonylamino) or an aryl group (e.g. phenyl and tolyl), or, together, $R_6$ and $R_7$ and, respectively, $R_8$ and $R_9$ can be the atoms necessary to complete a benzene ring (so that the heterocyclic nucleus results to be, for example, an α-naphthoxazole nucleus, a β-naphthoxazole or a β, β'-naphthoxazole),

$R_{11}$ and $R_{12}$ each represents an alkyl group (e.g. methyl, propyl, and butyl), a hydroxyalkyl group (e.g. 2-hydroxyethyl, 3-hydroxypropyl, and 4-hydroxybutyl), an acetoxyalkyl group (e.g. 2-acetoxyethyl and 4-acetoxybutyl), an alkoxyalkyl group (e.g. 2-methoxyethyl and 3methoxypropyl), a carboxyl group containing alkyl group (e.g. carboxymethyl, 2-carboxyethyl, 4-carboxybutyl, and 2-(2-carboxyethoxy)-ethyl), a sulfo group containing alkyl group (e.g. 2-sulfoethyl, 3-sulfopropyl, 4-sulfobutyl, 2-hydroxy-3-sulfopropyl, 2-(3-sulfopropoxy)-propyl, p-sulfobenzyl, and p-sulfophenethyl), a benzyl group, a phenetyl group, a vinylmethyl group, and the like,

$X^-$ represents an acid anion (e.g. a chloride, bromide, iodide, thiocyanate, methylsulfate, ethylsulfate, perchlorate, and p-toluensulfonate ion), and

n represents 1 or 2.

The alkyl groups included in said substituents $R_6$, $R_7$, $R_8$, $R_9$, $R_{10}$, and $R_{11}$ and, more particularly, the alkyl portions of said alkoxy, alkoxycarbonyl, alkoxycarbonylamino, hydroxyalkyl, acetoxyalkyl groups and of the alkyl groups associated with a carboxy or sulfo group each preferably contain from 1 to 12, more preferably from 1 to 4 carbon atoms, the total number of carbon atoms included in said groups preferably being no more than 20.

The aryl groups included in said substituents $R_6$, $R_7$, $R_8$ and $R_9$ each preferably contain from 6 to 18, more preferably from 6 to 10 carbon atoms, the total number of carbon atoms included in said groups arriving up to 20 carbon atoms.

The following are specific examples of J-band sensitizing dyes belonging to those represented by the general formula (IV) above:

| Dye | $R_{10}$ | $R_6$ | $R_7$ | $R_8$ | $R_9$ | $R_{11}$ | $R_{12}$ | X | n |
|---|---|---|---|---|---|---|---|---|---|
| A* | $C_2H_5$ | H | 5-Cl | H | 5'-Cl | $(CH_2)_3SO_3^-$ | $(CH_2)_3SO_3H$ | - | 1 |
| B** | $C_2H_5$ | H | 5-Cl | H | 5'-$C_6H_5$ | $(CH_2)_3SO_3^-$ | $CH_3$<br>\|<br>$(CH_2)_2CHSO_3H$ | - | 1 |
| C | $CH_3$ | H | 5-$OCH_3$ | H | 5-$OCH_3$ | $C_2H_5$ | $(CH_2)_3SO_3^-$ | - | 1 |
| D | $C_2H_5$ | 6-$CH_3$ | 5-Cl | H | 5'-Cl | $(CH_2)_4SO_3$ | $(CH_2)_3SO_3H$ | - | 1 |
| E | $C_2H_5$ | H | 5-Cl | H | 5-Cl | $C_2H_5$ | $C_2H_5$ | I | 2 |

* Triethylamine salt

** Sodium salt

Figure 3 shows the sensitivity spectrum of a front silver halide layer comprising silver bromoiodide grains comprising 2.3 mole percent iodide and having adsorbed on their surface the optical sensitizing dye A above, expressed as sensitivity (S) versus wavelengths (nm).

Preferably, the phosphors used in the back fluorescent screens applied in the present invention emit radiation in the ultraviolet region of the electromagnetic spectrum. More preferably, said phosphors emit radiation having more than about 80% of their spectral emission below 410 nm and their maximum of emission in the wavelength range of 300-360 nm. Ultraviolet emitting phosphors which may be used in the back fluorescent screens of the present invention include ultraviolet emitting phosphors known in the art such as lead or lanthanum activated barium sulfate phosphors, barium fluorohalide phosphors, lead activated barium silicate phosphors, gadolinium activated yttrium oxide phosphors, barium fluoride phosphors, alkali metal activated rare earth niobate or tantalate phosphors etc. Ultraviolet emitting

phosphors are described for example in BE 703,998 and 757,815, in EP 202,875 and by Buchanan et al., J. Applied Physics, vol. 9, 4342-4347, 1968, and by Clapp and Ginther, J. of the Optical Soc. of America, vol. 37, 355-362, 1947. Particularly suitable ultraviolet emitting phosphors for use in the back fluorescent screens used in the present invention are those represented by the general formula (V)

$$(Y_{1\text{-}2/3x\text{-}1/3y}, Sr_x, Li_y)\, TaO_4$$

wherein x and y are numbers such as to meet the conditions $10^{-5} \leq x \leq 1$ and $10^{-4} \leq y \leq 0.1$ as described in EP 202,875.

Figure 4 shows an emission spectrum of a back fluorescent screen comprising a fluorescent layer of (Y, Sr, Li)$TaO_4$ phosphor as ultraviolet emitting phosphor, expressed as fluorescence (F) versus wavelengths (nm).

The back silver halide emulsion layer, arranged according to this invention adjacent to the back actinic light emitting phosphor screen, comprises silver halide grains which are not optically sensitized but possess the inherent spectral sensitivity of the known types of photosensitive silver halides. Said inherent spectral sensitivity of the conventional silver halide emulsions used in photographic films as known ranges in the ultraviolet and blue region of the electromagnetic spectrum.

Figure 5 shows the sensitivity spectrum of a back silver halide emulsion layer comprising silver bromoiodide grains comprising 2.3 percent mole iodide and having no optical sensitizing dye adsorbed on their surface, expressed as sensitivity (S) versus wavelenghts (nm).

According to the present invention, the non-actinic radiation (preferably green light) emitted by the front screen imagewise exposes the adjacent front silver halide layer comprising silver halide grains optically sensitized to the radiation emitted by said screens. Part of said non-actinic radiation reaches the opposite back silver halide layer but does not crossover expose the silver halide grains of the back silver halide layer as those grains are not optically sensitized to the radiation emitted by said front screen. The ultraviolet or blue emission of the back fluorescent screen undergoes absorption by the adjacent back silver halide layer and imagewise exposes the silver halide grains which are not optically sensitized, rather than crossover passing to the opposite front silver halide layer. This is due to the fact that silver halide grains possess a good inherent absorption of light with a wavelength below 500 nm and a strong light scattering of ultraviolet and blue light through the dispersed silver halide particles of the emulsion layer. The above implies not having a large amount of ultraviolet or blue light of the back fluorescent screen to expose the opposite front silver halide layer. The crossover exposure reduction attained with the screen pair and double silver halide element combination of this invention is preferably at least 10 percent, more preferably at least 20 percent in comparison with a conventional combination of green emitting fluorescent screens and double coated green sensitized silver halide radiographic element. Accordingly, the image sharpness is improved by reducing crossover exposure using a unique combination of conventional silver halide emulsion layers and fluorescent screens.

The light-sensitive double-side coated silver halide radiographic element comprises a transparent polymeric base of the type commonly used in radiography, for instance a polyester base, and in particular a polyethylene terephthalate base.

In the silver halide photographic elements of this invention, the silver halide emulsions coated on the two surfaces of the support, the front optically sensitized silver halide emulsion and the back optically unsensitized silver halide emulsion, may be similar or different and comprise emulsions commonly used in photographic elements, such as silver chloride, silver iodide, silver chloro-bromide, silver chloro-bromo-iodide, silver bromide and silver bromoiodide, the silver bromoiodide being particularly useful for radiographic elements. The silver halide grains may have different shapes, for instance cubic, octahedrical, tabular shapes, and may have epitaxial growths; they generally have mean sizes ranging from 0.1 to 3 μm, more preferably from 0.4 to 1.5 μm. The emulsions are coated on the support at a total silver coverage comprised in the range from about 3 to 6 grams per square meter. The silver halide binding material used is a water-permeable hydrophilic colloid, which preferably is gelatin, but other hydrophilic colloids, such as gelatin derivatives, albumin, polyvinyl alcohols, alginates, hydrolized cellulose esters, hydrophilic polyvinyl polymers, dextrans, polyacrylamides, hydrophilic acrylamide copoly-mers and alkylacrylates can also be used alone or in combination with gelatin.

As regards the processes for silver halide emulsion preparation and use of particular ingredients in the emulsion and in the light-sensitive element, reference is made to Research Disclosure 18,431 published in August 1979, wherein the following chapters are dealt with in deeper details:

IA. Preparation, purification and concentration methods for silver halide emulsions.
IB. Emulsion types.
IC. Crystal chemical sensitization and doping.
II. Stabilizers, antifogging and antifolding agents.
IIA. Stabilizers and/or antifogging.

IIB. Stabilization of emulsions chemically sensitized with gold compounds.
IIC. Stabilization of emulsions containing polyalkylene oxides or plasticizers.
IID. Fog caused by metal contaminants.
IIE. Stabilization of materials comprising agents to increase the covering power.
IIF. Antifoggants for dichroic fog.
IIG. Antifoggants for hardeners and developers comprising hardeners.
IIH. Additions to minimize desensitization due to folding.
III. Antifoggants for emulsions coated on polyester bases.
IIJ. Methods to stabilize emulsions at safety lights.
IIK. Methods to stabilize X-ray materials used for high temperature, Rapid Access, roller processor transport processing.
III. Compounds and antistatic layers.
IV. Protective layers.
V. Direct positive materials.
VI. Materials for processing at room light.
IX. Spectral sensitization.
X. UV sensitive materials.
XII. Bases.

The X radiation image converting screens used in this invention have a fluorescent layer comprising a binder and a phosphor dispersed therein. The fluorescent layer is formed by dispersing the phosphor in the binder to prepare a coating dispersion, and then applying the coating dispersion by a conventional coating method to form a uniform layer. Although the fluorescent layer itself can be a radiation image converting screen when the fluorescent layer is self-supporting, the fluorescent layer is generally provided on a substrate to form a radiation image converting screen. Further, a protective layer for physically and chemically protecting the fluorescent layer is usually provided on the surface of the fluorescent layer. Furthermore, a primer layer is sometimes provided between the fluorescent layer and the substrate to closely bond the fluorescent layer to the substrate, and a reflective layer is sometimes provided between the substrate (or the primer) and the fluorescent layer.

The binder employed in the fluorescent layer of the X radiation image converting screens used in the present invention, can be, for example, one of the binders commonly used in forming layers: gum arabic, protein such as gelatin, polysaccharides such as dextran, organic polymer binders such as polyvinylbutyral, polyvinylacetate, nitrocellulose, ethylcellulose, vinylidene-chloride-vinylchloride copolymer, polymethylmethacrylate). A coating dispersion comprising the phosphor dispersed in a binder may be directly applied to the substrate (or to the primer layer or to the reflective layer).

Further, in the X radiation image converting screens used in the present invention, a protective layer for physically and chemically protecting the fluorescent layer is generally provided on the surface of the fluorescent layer intended for exposure (on the side opposite the substrate). When, as mentioned above, the fluorescent layer is self-supporting, the protective layer may be provided on both surfaces of the fluorescent layer. The protective layer may be provided on the fluorescent layer by directly applying thereto a coating dispersion to form the protective layer thereon, or may be provided thereon by bonding thereto the protective layer formed beforehand. As the material of the protective layer, a conventional material for a protective layer such a nitrocellulose, ethylcellulose, cellulose acetate, polyester, and polyethylene terephthalate can be used.

The X radiation image converting screens used in the present invention may be colored with a colorant. Further, the fluorescent layer of the radiation image converting screen used in the present invention may contain a white powder dispersed therein. By using a colorant or a white powder, a radiation image converting screen which provides an image of high sharpness can be obtained.

## EXAMPLES

The invention can be better illustrated by reference to the following specific examples and comparative investigations.

Green Emitting Phosphor Screen $GRS_1$

A high speed green emitting phosphor screen, screen $GRS_1$, was prepared consisting of a $Gd_2O_2S$:Tb phosphor with average particle grain size of 8.5 µm coated in a hydrophobic polymer binder at a phosphor coverage of 1050 g/m$^2$ and a thickness of 270 µm on a polyester support. Between the phosphor layer and the support a reflective layer of $TiO_2$ particles in a poly(urethane) binder was coated. The screen was overcoated with a cellulose triacetate

layer.

Green Emitting Phosphor Screen $GRS_2$

A medium speed green emitting phosphor screen, screen GRS2, was prepared consisting of a $Gd_2O_2S$:Tb phosphor with average particle grain size of 5.5 µm coated in a hydrophobic polymer binder at a phosphor coverage of 520 g/$m^2$ and a thickness of 135 µm on a polyester support. Between the phosphor layer and the support a reflective layer of $TiO_2$ particles in a poly(urethane) binder was coated. The screen was overcoated with a cellulose triacetate layer.

Green Emitting Phosphor Screen $GRS_3$

A low speed green emitting phosphor screen, screen $GRS_3$, was prepared consisting of a $Gd_2O_2S$:Tb phosphor with average particle grain size of 4.5 µm coated in a hydrophobic polymer binder at a phosphor coverage of 150 g/$m^2$ and a thickness of 40 pm on a polyester support. The screen was overcoated with a cellulose triacetate layer.

UV Emitting Phosphor Screen $UVS_4$

An UV emitting phosphor screen, screen $UVS_4$, was prepared consisting of the type NP-3040 (Y, Sr, Li)$TaO_4$ phosphor of Nichia Kagaku Kogyo K.K. with average particle grain size of 5.5 pm coated in a hydrophobic polymer binder at a phosphor coverage of 300 g/$m^2$ and a thickness of 75 µm on a polyester support. Between the phosphor layer and the support a reflective layer of $TiO_2$ particles in a poly(urethane) binder was coated. The screen was overcoated with a cellulose triacetate layer.

UV Emitting Phosphor Screen $UVS_5$

An UV emitting phosphor screen, screen $UVS_5$, was prepared consisting of the type NP-3040 (Y, Sr, Li)$TaO_4$ phosphor of Nichia Kagaku Kogyo K.K. with average particle grain size of 6.5 µm coated in a hydrophobic polymer binder at a phosphor coverage of 700 g/$m^2$ and a thickness of 180 µm on a polyester support. Between the phosphor layer and the support a reflective layer of $TiO_2$ particles in a poly(urethane) binder was coated. The screen was overcoated with a cellulose triacetate layer.

Light-sensitive Photographic Film $GRUVF_1$

A light-sensitive film having a spectrally unsensitized silver halide emulsion layer (hereinafter designated front layer) coated on one side of the support and a green sensitized silver halide emulsion layer (hereinafter designated back layer) coated on the other side of the support, film $GRUVF_1$, was prepared in the following manner. On one side of a 7 mil (0.18 mm) polyester support was coated a silver halide gelatin emulsion layer containing cubic silver bromoiodide grains (having 2 mole percent iodide and an average grain size of 0.8 µm) at 2.5 g/$m^2$ Ag and 1.82 g/$m^2$ gelatin. The emulsion was sulfur and gold chemically sensitized, and added with resorcylaldehyde and dimethylol urea hardeners. A protective overcoat containing 1.2 g/$m^2$ gelatin was applied to said silver bromoiodide front layer. On the other side of the polyester support was coated a spectrally sensitized silver halide gelatin emulsion layer (comprising a 4.5:2.7:1.8:1 by weight blend of cubic silver bromoiodide grains having 2 mole percent iodide and an average grain size of 1.35 µm, cubic silver bromoiodide grains having 2 mole percent iodide and an average grain size of 0.8 µm, octahedral silver chlorobromoiodide having 1.2 mole percent iodide and 84 mole percent bromide and an average grain size of 0.7 µm, and octahedral silver bromoiodide grains having 1.5 mole percent iodide and an average grain size of 0.4 µm) at 2.5 g/$m^2$ Ag and 1.68 g/$m^2$ gelatin. The emulsion was sulfur and gold chemically sensitized, spectrally sensitized with 500 mg/ mole Ag of the green sensitizing Dye A, anhydro-5,5'-dichloro-9-ethyl--3,3'-bis(3-sulfopropyl)-oxacarbocyanine hydroxyde triethylamine salt, and added with resorcylaldehyde and dimethylol urea hardeners. A protective overcoat containing 1.2 g/$m^2$ gelatin was applied to said silver halide back layer.

The back green sensitive silver halide emulsion layer, if coated as single side at a silver coverage of 2.5 g/$m^2$ and exposed by the green emitting phosphor screen $GRS_1$, exhibited a speed of 0.90 log E (where E represents exposure in meter-candle-seconds) higher than that of the front silver halide emulsion layer, if coated as single side at a silver coverage of 2.5 g/$m^2$ and exposed by the UV emitting phosphor screen $UVS_4$. The above speed is referred to a density of 0.50 above Dmin. If the speed is measured at a density of 1.0 above Dmin the speed difference is 0.20 logE.

The green sensitive silver halide emulsion layer, if coated as single side at a silver coverage of 2.5 g/$m^2$ and exposed by the green emitting phosphor screen $GRS_1$, exhibited an average contrast of 0.6. The front silver halide

emulsion layer, if coated as single side at a silver coverage of 2.5 g/$m^2$ and exposed by the UV emitting phosphor screen $UVS_4$, exhibited an average contrast of 2.0. All average contrasts in the examples are based on density measurements at 0.25 and 1.00 above Dmin.

Light-sensitive Photographic Film $GRUVF_2$

A light-sensitive film having a green sensitized silver halide emulsion layer (hereinafter designated front layer) coated on one side of the support and a spectrally unsensitized silver halide emulsion layer (hereinafter designated back layer) coated on the other side of the support, film $GRUVF_2$, was prepared in the following manner. On one side of a 7 mil (0.18 mm) polyester support was coated a silver halide gelatin emulsion layer containing tabular silver bromide grains (having an aspect ratio of 7.5:1 and an average grain size of 1.3 μm) at 2.0 g/$m^2$ Ag and 1.6 g/$m^2$ gelatin. The emulsion was sulfur and gold chemically sensitized, spectrally sensitized with 450 mg/ mole Ag of the green sensitizing Dye A, anhydro-5,5'-dichloro-9-ethyl-3,3'-bis(3-sulfopropyl)-oxacarbocyanine hydroxyde triethylamine salt and added with a divinylsulfonyl type hardener. A protective overcoat containing 1.2 g/$m^2$ gelatin was applied to said silver bromoiodide front layer. On the other side of the polyester support was coated a silver halide gelatin emulsion layer (comprising a 4.5:2.7:1.8:1 by weight blend of cubic silver bromoiodide grains having 2 mole percent iodide and an average grain size of 1.35 μm, cubic silver bromoiodide grains having 2 mole percent iodide and an average grain size of 0.8 μm, octahedral silver chlorobromoiodide having 1.2 mole percent iodide and 84 mole percent bromide and an average grain size of 0.7 μm, and octahedral silver bromoiodide grains having 1.5 mole percent iodide and an average grain size of 0.4 μm ) at 2.5 g/$m^2$ Ag and 1.68 g/$m^2$ gelatin. The emulsion was sulfur and gold chemically sensitized, and added with resorcylaldehyde and dimethylol urea hardeners. A protective overcoat containing 1.2 g/$m^2$ gelatin was applied to said silver halide back layer.

The front green sensitive silver halide emulsion layer, if coated as single side at a silver coverage of 2.5 g/ $m^2$ and exposed by the green emitting phosphor screen $GRS_1$, exhibited a speed of 0.5 log E (where E represents exposure in meter-candle-seconds) lower than that of the back silver halide emulsion layer, if coated as single side at a silver coverage of 2.5 g/$m^2$ and exposed by the UV emitting phosphor screen $UVS_4$. The above speed is referred to a density of 0.50 above Dmin. If the speed is measured at a density of 1.0 above Dmin the speed difference is 0.30 logE. The front green sensitive silver halide emulsion layer, if coated as single side at a silver coverage of 2.5 g/$m^2$ and exposed by the green emitting phosphor screen $GRS_1$, exhibited an average contrast of 2.1. The back silver halide emulsion layer, if coated as single side at a silver coverage of 2.5 g/$m^2$ and exposed by the UV emitting phosphor screen $UVS_4$, exhibited an average contrast of 1.2. All average contrasts in the examples are based on density measurements at 0.25 and 1.00 above Dmin.

Light-sensitive Photographic Film $GRGRF_3$

An extended latitude light-sensitive film having a green sensitized silver halide emulsion layer coated on each side of a support, film $GRGRF_3$, was prepared in the following manner. On each side of a 7 mil (0.18 mm) polyester support was coated a green sensitized silver halide gelatin emulsion layer (comprising a 70:15:15 by weight blend of tabular silver bromide grains having average aspect ratio of 7.5:1 and an average grain size of 1.3 μm, cubic silver bromoiodide grains having 2 mole percent iodide and an average grain size of 0.8μm, and octahedral silver bromoiodide grains having 1.5 mole percent iodide and an average grain size of 0.4 μm) at 2 g/$m^2$ Ag and 1.5 g/$m^2$ gelatin. The emulsion was sulfur and gold chemically sensitized and spectrally sensitized with 500 mg/ mole Ag of the green sensitizing Dye A, anhydro-5,5'-dichloro-9-ethyl-3,3'-bis(3-sulfopropyl)-oxacarbocyanine hydroxyde triethylamine salt. A protective overcoat containing 1.2 g/$m^2$ gelatin was applied to each silver halide layer.

Comparison of Screen Pairs and Light-sensitive Photographic Films

Pairs of screens in combination with double coated light-sensitive photographic films described above were exposed as follows. Referring to Figure 1, film-screens combinations were made in which the front screen was in contact with the front emulsion layer and the back screen was in contact with the back emulsion layer. Each screen pair-film combination was exposed to X-rays from a tungsten target tube operated at 80 kVp and 25 mA from a distance of 120 cm. The X-rays passed through an aluminium step wedge before reaching the screen-film combination. Following exposure the films were processed in a 3M Trimatic™ XP507 processor using a developer and fixer of the following composition:

| Developer | | |
|---|---|---|
| KOH (35% weight solution) | g | 105 |

(continued)

| Developer | | |
|---|---|---|
| Acetic acid | g | 7.6 |
| Glutaraldehyde (50% weight solution) | g | 7.2 |
| Sodium metabisulfite | g | 45.0 |
| Ethylene glycol | g | 10.0 |
| Diethylene glycol | g | 4.9 |
| Morfolinometadisulfonic acid (40% weight solution) | g | 7.5 |
| 5-Methylbenzotriazole | mg | 80.0 |
| 5-Nitroindazole | mg | 107.0 |
| 1-Phenyl-1-H-tetrazole-5-thiole | mg | 7.0 |
| Boric acid | g | 1.7 |
| Potassium carbonate | g | 13.25 |
| Ethylenediaminotetraacetic acid . 4Na. $2H_2O$ | g | 1.5 |
| 1-Phenyl-3-pyrazolidone | g | 1.45 |
| Hydroquinone | g | 20.0 |
| NaBr | g | 5.0 |
| Water to make | l | 1 |
| pH 10.35 | | |

| Fixer | | |
|---|---|---|
| Ammonium thiosulfate | g | 145.2 |
| Sodium sulfite | g | 8.12 |
| Boric acid | g | 7.0 |
| Acetic acid | g | 7.52 |
| Ammonium acetate | g | 19.24 |
| Alluminium sulfate | g | 7.74 |
| Sulfuric acid | g | 3.58 |
| 2-Phenoxyethanol | g | 0.12 |
| Water to make | l | 1 |
| pH 4.30 | | |

The speed and the image quality are reported in the following table. Percent crossover was calculated by using the following equation:

$$\% \text{ Cross-Over} = \frac{1}{\text{antilog } (\delta \log E)} \times 100$$

wherein δlogE is the difference in speed between the two emulsion layers of the same film when exposed with a single screen (the lower the percent crossover, the better the image quality).

TABLE

| Screen/Film assembly | Rel. speed D=1.0+Dmin | % Cross D=0.5+ Dmin | Contrast | | |
|---|---|---|---|---|---|
| | | | Average | Lung D=1.8 | Heart D=0.8 |
| 1 $GRS_2$/$GRGRF_3$/ $GRS_2$ | Ref. | 26 | 1.83 | 2.08 | 1.70 |
| 2 $UVS_4$/$UVGRF_1$/ $GRS_1$ | +0.1 logE | 12 | 1.52 | 2.56 | 1.04 |

TABLE (continued)

| Screen/Film assembly | Rel. speed D=1.0+Dmin | % Cross D=0.5+ Dmin | Contrast | | |
|---|---|---|---|---|---|
| | | | Average | Lung D=1.8 | Heart D=0.8 |
| 3 $GRS_3$/$GRUVF_2$/ $UVS_5$ | -0.18 logE | 16 | 1.59 | 2.44 | 1.03 |

From the Table it is apparent that assemblies 2 and 3 according to the present invention provide lower crossover of exposing radiation, higher lung contrast (selected as the contrast corresponding to a density of 1.8, which is the density for reading lung features in a radiograph) and lower heart contrast (selected as the contrast correponding to a density of 0.8, which is the density for reading heart features in a radiograph) compared with assembly 1 corresponding to a conventional extended latitude radiographic assembly used for chest X-ray images.

Figures 6 and 7 are graphs illustrating characteristic curves of the radiographic double coated silver halide elements X-ray exposed by screen pair as reported in the Table, wherein the empty dot curve represents the characteristic curve obtained with the reference assembly 1, and the full dot curves represent the characteristic curve obtained, respectively, with assemblies 2 and 3 according to the present invention.

## Claims

**1.** A combination of photosensitive elements for use in radiography comprising two separate front and back X-ray fluorescent screens and a silver halide radiographic element comprising a support base and front and back silver halide emulsion layer units each coated on one surface of said support, wherein said front screen is arranged adjacent to said front silver halide layer unit and said back screen is arranged adjacent to said back silver halide layer unit, and wherein

1) said front screen comprises a first radiation emitting phosphor and said front silver halide layer unit comprises silver halide grains sensitive to said first radiation emitted by said front screen,
2) said back screen comprises a second radiation emitting phosphor and said back silver halide layer unit comprises silver halide grains sensitive to said second radiation emitted by said back screen,
3) said first radiation emitted by said front screen is in a first wavelength region of the electromagnetic spectrum and said second radiation emitted by said back screen is in a second wavelength region of the electromagnetic spectrum,
4) said front silver halide emulsion layer unit is substantially insensitive to said second radiation emitted by said back screen, and
5) said back silver halide emulsion layer unit is substantially insensitive to said first radiation emitted by said front screen,

characterized in that the two silver halide emulsion layer units have a difference of average contrast, based on density measurements at 0.25 and 1.00 above minimum density, of at least 0.5, and a difference in speed, measured at density 0.5 above minimum density, of at least 0.5 logE.

**2.** The combination of claim 1, wherein

a) said front screen comprises a non-actinic light emitting phosphor and said front silver halide layer comprises silver halide grains spectrally sensitized to the radiation emitted by said front screen, and
b) said back screen comprises a UV emitting phosphor and said back silver halide layer comprises spectrally insensitized silver halide grains.

**3.** The combination of claim 1, wherein said front screen comprises a substantially green emitting phosphor.

**4.** The combination of claim 1, wherein said front screen comprises a green emitting phosphor having more than 80% of its spectral emission above 480 nm and its maximum of emission in the wavelength range of 530 - 570 nm.

**5.** The combination of claim 1, wherein said front screen comprises a green emitting phosphor represented by the general formula

$$(Ln_{1-a-b}, Tb_a, Tm_b)_2O_2S$$

wherein Ln is at least one rare earth selected from lanthanium, gadolinium and lutetium, and a and b are numbers such as to meet the conditions of $0.0005 \leq a \leq 0.09$ and $0 \leq b \leq 0.01$, respectively, or the general formula

$$(Y_{1-c-a-b}, Ln_c, Tb_a, Tm_b)_2O_2S$$

wherein Ln is at least one rare earth selected from lanthanium, gadolinium and lutetium, and a, b and c are numbers such as to meet the conditions of $0.0005 \leq a \leq 0.09$, $0 \leq b \leq 0.01$ and $0.65 \leq c \leq 0.95$, respectively.

**6.** The combination of claim 1, wherein said front screen comprises a terbium-activated gadolinium or lanthanium oxysulphide phosphor having substantially emission peaks at 487 and 545 nm.

**7.** The combination of claim 1, wherein said front silver halide layer unit comprises silver halide grains spectrally sensitized with spectral sensitizing dyes of the cyanine or merocyanine dyes.

**8.** The combination of claim 4, wherein said front silver halide layer unit comprises silver halide grains spectrally sensitized with sensitizing dyes in such a way that it is sensitive for light in wavelength range of 530 - 570 nm.

**9.** The combination of claim 4, wherein said front silver halide emulsion layer unit comprises silver halide grains spectrally sensitized with sensitizing dyes represented by the general formula

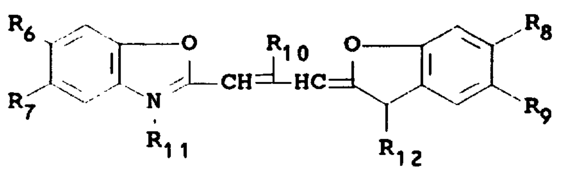

$(X^-)_{n-1}$

wherein $R_{10}$ represents a hydrogen atom or an alkyl group, $R_6$, $R_7$, $R_8$ and $R_9$ each represent a hydrogen atom, a halogen atom, a hydroxy group, an alkoxy group, an amino group, an acylamino group, an acyloxy group, an alkoxycarbonyl group, an alkyl group, an alkoxycarbonylamino group or an aryl group, or, together, $R_6$ and $R_7$, and respectively $R_8$ and $R_9$ can be the atoms necessary to complete a benzene ring, $R_{11}$ and $R_{12}$ each represent an alkyl group, a hydroxyalkyl group, an acetoxyalkyl group, an alkoxyalkyl group, a carboxyl group containing alkyl group, a sulfo group containing alkyl group, a benzyl group, a phenethyl group or a vinylmethyl group, $X^-$ represents an acid anion and n represents 1 or 2.

**10.** The combination of claim 2, wherein said back screen comprises a UV emitting phosphor having more than 80% of its spectral emission below 410 nm and its maximum of emission in the wavelength range of 300 - 360 nm.

**11.** The combination of claim 2, wherein said back screen comprises a UV emitting phosphor selected in the class consisting of lead or lanthanum activated barium sulfate phosphors, barium fluorohalide phosphors, lead activated barium silicate phosphors, gadolinium activated yttrium oxide phosphors, barium fluoride phosphors, and alkali metal activated rare earth niobate or tantalate phosphors.

**12.** The combination of claim 2, wherein said back screen comprises a UV emitting phosphor corresponding to the general formula

$$(Y_{1-2/3x-1/3y}, Sr_x, Li_y)\ TaO_4$$

wherein x and y are numbers such as to meet the conditions $10^{-5} \leq x \leq 1$ and $10^{-4} \leq y \leq 0.1$.

**13.** The combination of claim 2, wherein said back silver halide layer unit comprises chemically sensitized spectrally

insensitized silver bromoiodide grains.

**14.** The combination of claim 1, wherein the first and the second emulsion layer units exhibit an average contrast difference in the range of from 0.5 to 2.0.

**15.** The combination of claim 14, wherein the first and the second emulsion layer units exhibit an average contrast difference in the range of from 1.0 to 1.5.

**16.** The combination of claim 1, wherein the first and the second emulsion layer units exhibit a speed difference in the range of from 0.5 to 2.0 logE.

**17.** The combination of claim 16, wherein the first and the second emulsion layer units exhibit a speed difference in the range of from 0.6 to 1.2 logE.

**18.** The combination of claim 1, wherein the lower average contrast silver halide emulsion unit exhibits a speed which is higher than that of the higher average contrast silver halide emulsion unit.

**19.** A method for recording a radiation image comprising the steps of (i) imagewise exposing to X radiations a combination of photosensitive elements comprising two separate front and back X-ray fluorescent screens and a silver halide radiographic element comprising a support base and front and back silver halide emulsion layer units each coated on one surface of said support, wherein said front screen is arranged adjacent to said front silver halide layer and said back screen is arranged adjacent to said back silver halide layer, and wherein

1) said front screen comprises a first radiation emitting phosphor and said front silver halide layer unit comprises silver halide grains sensitive to said first radiation emitted by said front screen,
2) said back screen comprises a second radiation emitting phosphor and said back silver halide layer unit comprises silver halide grains sensitive to said second radiation emitted by said back screen,
3) said first radiation emitted by said front screen is in a wavelength region of non-actinic radiation and said second radiation emitted by said back screen is in a wavelength region of actinic radiation,
4) said first radiation emitted by said front screen has a wavelength which differs from said second radiation emitted by said back screen by at least 50 nm,
5) said front silver halide emulsion layer unit is substantially insensitive to said second radiation emitted by said back screen, and
6) said back silver halide emulsion layer unit is substantially insensitive to said first radiation emitted by said front screen,

the difference in wavelength region of said first and second radiation and the insensitivity of each silver halide emulsion layer unit to radiation emitted by opposite screen being such to reduce crossover exposure of at least 10 percent when compared with a symmetrical combination of a pair of green light emitting fluorescent screens and a double coated green sensitized silver halide emulsion radiographic element, and (ii) developing said silver halide radiographic element halide,

characterized in that the two silver halide emulsion layer units have a difference of average contrast, based on density measurements at 0.25 and 1.00 above minimum density, of at least 0.5, and a difference in speed, measured at density 0.5 above minimum density, of at least 0.5 logE.

**20.** The method for recording a radiation image according to claim 19, wherein

a) said front screen comprises a non-actinic radiation emitting phosphor and said front silver halide layer unit comprises silver halide grains spectrally sensitized to the radiation emitted by said front screen, and
b) said back screen comprises a UV emitting phosphor and said back silver halide layer unit comprises spectrally insensitized silver halide grains.

**21.** The method for recording a radiation image according to claim 19, wherein said front screen comprises a green emitting phosphor having more than 80% of its spectral emission above 480 nm and its maximum of emission in the wavelength range of 530 - 570 nm.

**22.** The method for recording a radiation image according to claim 19, wherein said front screen comprises a green emitting phosphor represented by the general formula

$$(Ln_{1-a-b}, Tb_a, Tm_b)_2O_2S$$

wherein Ln is at least one rare earth selected from lanthanium, gadolinium and lutetium, and a and b are numbers such as to meet the conditions of $0.0005 \leq a \leq 0.09$ and $0 \leq b \leq 0.01$, respectively, or the general formula

$$(Y_{1-c-a-b}, Ln_c, Tb_a, Tm_b)_2O_2Tb$$

wherein Ln is at least one rare earth selected from lanthanium, gadolinium and lutetium, and a, b and c are numbers such as to meet the conditions of $0.0005 \leq a \leq 009$, $0 \leq b \leq 0.01$ and $0.65 \leq c \leq 0.95$, respectively.

**23.** The method for recording a radiation image according to claim 19, wherein said front screen comprises a terbium-activated gadolinium or lanthanium oxysulphide phosphor having substantially emission peaks at 487 and 545 nm.

**24.** The method for recording a radiation image according to claim 19, wherein said front silver halide layer unit comprises silver halide grains spectrally sensitized with spectral sensitizing dyes of the cyanine or merocyanine dyes.

**25.** The method for recording a radiation image according to claim 19, wherein said front silver halide layer unit comprises silver halide grains spectrally sensitized with sensitizing dyes in such a way that it is sensitive for light in wavelength range of 530 - 570 nm.

**26.** The method for recording a radiation image according to claim 19, wherein said front silver halide emulsion layer comprises silver halide grains spectrally sensitized with sensitizing dyes represented by the general formula

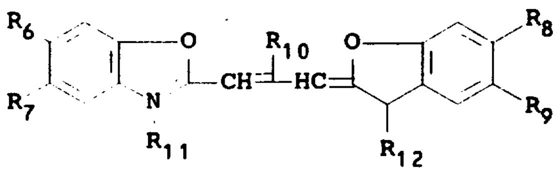

$(X^-)_{n-1}$

wherein $R_{10}$ represents a hydrogen atom or an alkyl group, $R_6$, $R_7$, $R_8$ and $R_9$ each represent a hydrogen atom, a halogen atom, a hydroxy group, an alkoxy group, an amino group, an acylamino group, an acyloxy group, an alkoxycarbonyl group, an alkyl group, an alkoxycarbonylamino group or an aryl group, or, together, $R_6$ and $R_7$, and respectively $R_8$ and $R_9$ can be the atoms necessary to complete a benzene ring, $R_{11}$ and $R_{12}$ each represent an alkyl group, a hydroxyalkyl group, an acetoxyalkyl group, an alkoxyalkyl group, a carboxyl group containing alkyl group, a sulfo group containing alkyl group, a benzyl group, a phenethyl group or a vinylmethyl group, $X^-$ represents an acid anion and n represents 1 or 2.

**27.** The method for recording a radiation image according to claim 19, wherein said back screen comprises a UV emitting phosphor having more than 80% of its spectral emission below 410 nm and its maximum of emission in the wavelength range of 300 - 360 nm.

**28.** The method for recording a radiation image according to claim 19, wherein said back screen comprises a UV emitting phosphor selected in the class consisting of lead or lanthanum activated barium sulfate phosphors, barium fluorohalide phosphors, lead activated barium silicate phosphors, gadolinium activated yttrium oxide phosphors, barium fluoride phosphors, and alkali metal activated rare earth niobate or tantalate phosphors.

**29.** The method for recording a radiation image according to claim 19, wherein said back screen comprises a UV emitting phosphor corresponding to the general formula

$$(Y_{1-2/3x-1/3y}, Sr_y, Li_z)\,TaO_4$$

wherein x and y are numbers such as to meet the conditions $10^{-5} \leq x \leq 1$ and $10^{-4} \leq y \leq 0.1$.

**30.** The method for recording a radiation image according to claim 19, wherein said back silver halide layer unit comprises chemically sensitized spectrally insensitized silver bromoiodide grains.

**31.** A silver halide radiographic element comprising a support base and front and back silver halide emulsion layer units each coated on one surface of said support, characterized in that said front silver halide emulsion layer unit comprises silver halide grains sensitive to a wavelength region of the non-actinic radiation, and said back silver halide emulsion layer unit comprises UV or blue sensitive silver halide grains, characterized in that the two silver halide emulsion layer units have a difference of average contrast, based on density measurements at 0.25 and 1.00 above minimum density, of at least 0.5, and a difference in speed, measured at density 0.5 above minimum density, of at least 0.5 logE.

**Patentansprüche**

**1.** Kombination von lichtempfindlichen Elementen für radiographischen Gebrauch umfassend zwei getrennte Röntgenfluoreszenzschirme, einen vorderen und einen hinteren, und ein Silberhalogenid enthaltendes radiographisches Element, umfassend ein Trägermaterial und eine vordere und eine hintere Schichteinheit einer Silberhalogenidemulsion, die jeweils auf einer Oberfläche des Trägermaterials aufgebracht sind, wobei der vordere Schirm angrenzend zu der vorderen Silberhalogenidschichteinheit angeordnet ist und der hintere Schirm angrenzend zu der hinteren Silberhalogenidschichteinheit angeordnet ist, und wobei

1) der vordere Schirm einen eine erste Strahlung emittierenden Phosphor umfaßt, und die vordere Silberhalogenidschichteinheit Silberhalogenidkömer umfaßt, die empfindlich gegenüber der ersten Strahlung sind, die durch den vorderen Schirm emittiert wird,
2) der hintere Schirm einen eine zweite Strahlung emittierenden Phosphor umfaßt, und die hintere Silberhalogenidschichteinheit Silberhalogenidkörner umfaßt, die empfindlich gegenüber der zweiten Strahlung sind, die vom hinteren Schirm emittiert wird,
3) die erste Strahlung, die durch den vorderen Schirm emittiert wird, in einem ersten Wellenlängenbereich des elektromagnetischen Spektrums liegt und die zweite Strahlung, die durch den hinteren Schirm emittiert wird, in einem zweiten Wellenlängenbereich des elektromagnetischen Spektrums liegt,
4) die vordere Schichteinheit der Silberhalogenidemulsion im wesentlichen unempfindlich gegenüber der zweiten Strahlung ist, die durch den hinteren Schirm emittiert wird, und
5) die hintere Schichteinheit der Silberhalogenidemulsion im wesentlichen unempfindlich gegenüber der ersten Strahlung ist, die durch den vorderen Schirm emittiert wird,

dadurch gekennzeichnet, daß die zwei Schichteinheiten der Silberhalogenidemulsion einen Unterschied im mittleren Kontrast von mindestens 0,5 aufweisen, basierend auf Schwärzungsmessungen bei 0,25 und 1,00 über der minimalen Schwärzung, und daß sie einen Unterschied in der Empfindlichkeit von mindestens 0,5 logE aufweisen, gemessen bei einer Schwärzung von 0,5 über der minimalen Schwärzung.

**2.** Kombination nach Anspruch 1, wobei

a) der vordere Schirm einen nicht aktinisches Licht emittierenden Phosphor, und die vordere Silberhalogenidschicht gegenüber der durch den vorderen Schirm emittierten Strahlung spektral sensibilisierte Silberhalogenidkörner umfaßt, und
b) der hintere Schirm einen UV-Strahlung emittierenden Phosphor, und die hintere Silberhalogenidschicht spektral nicht sensibilisierte Silberhalogenidkörner umfäßt.

**3.** Kombination nach Anspruch 1, wobei der vordere Schirm einen im wesentlichen grün emittierenden Phosphor umfaßt.

**4.** Kombination nach Anspruch 1, wobei der vordere Schirm einen grün emittierenden Phosphor umfaßt, dessen spektrale Emission zu mehr als 80 % oberhalb von 480 nm liegt und dessen maximale Emission in dem Wellenlängenbereich von 530 bis 570 nm liegt.

**5.** Kombination nach Anspruch 1, wobei der vordere Schirm einen grün emittierenden Phosphor der allgemeinen Formel

$$(Ln_{1-a-b}, Tb_a, Tm_b)_2O_2S$$

wobei Ln mindestens ein Seltenerdmetall, ausgewählt aus Lanthan, Gadolinium und Lutetium ist, und a und b Zahlen sind, die den Bedingungen $0{,}0005 \leq a \leq 0{,}09$ bzw. $0 \leq b \leq 0{,}01$ gehorchen, oder der allgemeinen Formel

$$(Y_{1-c-a-b}, Ln_c, Tb_a, Tm_b)_2O_2S$$

wobei Ln mindestens ein Seltenerdmetall, ausgewählt aus Lanthan, Gadolinium und Lutetium ist, und a, b und c Zahlen sind, die den Bedingungen $0{,}0005 \leq a \leq 0{,}09$, $0 \leq b \leq 0{,}01$ bzw. $0{,}065 \leq c \leq 0{,}06$ gehorchen, umfaßt.

**6.** Kombination nach Anspruch 1, wobei der vordere Schirm einen Terbium-aktivierten Gadolinium- oder Lanthanoxysulfidphosphor, der im wesentlichen Emissionspeaks bei 487 und 545 nm hat, umfaßt.

**7.** Kombination nach Anspruch 1, wobei die vordere Silberhalogenidschichteinheit mit spektral sensibilisierenden Farbstoffen der Cyanin- oder Merocyaninfarbstoffe spektral sensibilisierte Silberhalogenidkörner umfaßt.

**8.** Kombination nach Anspruch 4, wobei die vordere Silberhalogenidschichteinheit mit sensibilisierenden Farbstoffen derart spektral sensibilisierte Silberhalogenidkörner umfaßt, daß diese empfindlich für Licht im Wellenlängenbereich von 530 bis 570 nm sind.

**9.** Kombination nach Anspruch 4, wobei die vordere Schichteinheit der Silberhalogenidemulsion mit sensibilisierendenden Farbstoffen der folgenden Formel spektral sensibilisierte Silberhalogenidkömer umfaßt.

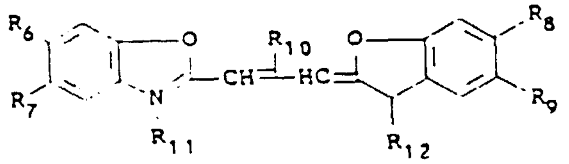

$(X^-)_{n-1}$

wobei $R_{10}$ ein Wasserstoffatom oder ein Alkylrest ist, $R_6$, $R_7$, $R_8$ und $R_9$ jeweils ein Wasserstoffatom, ein Halogenatom, eine Hydroxygruppe, ein Alkoxyrest, eine Aminogruppe, eine Acylaminogruppe, ein Acyloxyrest, ein Alkoxycarbonylrest, ein Alkylrest, ein Alkoxycarbonylaminorest oder ein Arylrest sind, oder $R_6$ und $R_7$ bzw. $R_8$ und $R_9$ zusammen die Atome sein können, die notwendig sind. um einen Benzolring zu vervollständigen, $R_{11}$ und $R_{12}$ jeweils ein Alkylrest, ein Hydroxyalkylrest, ein Acetoxyalkylrest, ein Alkoxyalkylrest, eine Carbonsäuregruppe, die einen Alkylrest enthält, eine Sulfogruppe, die einen Alkylrest enthält, eine Benzylgruppe, eine Phenethylgruppe oder eine Vinylmethylgruppe sind, $X^-$ ein Säureanion und n 1 oder 2 ist.

**10.** Kombination nach Anspruch 2, wobei der hintere Schirm einen UV emittierenden Phosphor umfaßt. dessen spektrale Emission zu mehr als 80 % unter 410 nm liegt und dessen Maximum an Emission im Wellenlängenbereich von 300 bis 360 nm liegt.

**11.** Kombination nach Anspruch 2, wobei der hintere Schirm einen UV-emittierenden Phosphor umfaßt, ausgewählt aus Blei- oder Lanthan-aktivierten Bariumsulfatphosphoren, Bariumfluorhalogenidphosphoren, Blei-aktivierten Bariumsilikatphosphoren, Gadolinium-aktivierten Yttriumoxidphosphoren. Bariumfluoridphosphoren und Alkalimetall-aktivierten Seltenerdmetall-Niobat- oder Tantalatphosphoren.

**12.** Kombination nach Anspruch 2, wobei der hintere Schirm einen UV-emittierenden Phosphor gemäß der allgemeinen Formel umfaßt:

$$(Y_{1-2/3x-1/3y}, Sr_x, Li_y)\, TaO_4$$

wobei x und y Zahlen sind, die die Bedingungen $10^{-5} \leq x \leq 1$ und $10^{-4} \leq y \leq 0{,}1$ erfüllen.

**13.** Kombination nach Anspruch 2, wobei die hintere Silberhalogenidschichteinheit chemisch sensibilisierte und spektral nicht sensibilisierte Silberbromiodidkömer umfaßt.

**14.** Kombination nach Anspruch 1, wobei die Einheiten der ersten und zweiten Emulsionsschicht einen durchschnittlichen Kontrastunterschied im Bereich von 0,5 bis 2 zeigen.

**15.** Kombination nach Anspruch 14, wobei die Einheiten der ersten und zweiten Emulsionsschicht einen durchschnittlichen Kontrastunterschied im Bereich von 1,0 bis 1,5 zeigen.

**16.** Kombination nach Anspruch 1, wobei die Einheiten der ersten und zweiten Emulsionsschicht einen Unterschied in der Empfindlichkeit im Bereich von 0,5 bis 2,0 logE zeigen.

**17.** Kombination nach Anspruch 16, wobei die Einheiten der ersten und zweiten Emulsionsschicht einen Unterschied in der Empfindlichkeit im Bereich von 0,6 bis 1,2 logE zeigen.

**18.** Kombination nach Anspruch 1, wobei die Einheit der Silberhalogenidemulsion mit dem niedrigeren durchschnittlichen Kontrast eine Empfindlichkeit zeigt, die höher ist als die der Einheit der Silberhalogenidemulsion mit dem höheren durchschnittlichen Kontrast.

**19.** Verfahren zum Aufzeichnen eines Strahlungsbildes, umfassend die Schritte

(i) bildgemäßes Belichten mit Röntgenstrahlen einer Kombination von lichtempfindlichen Elementen, umfassend zwei getrennte Röntgenfluoreszenzschirme, einen vorderen und einen hinteren, und ein radiographisches Element aus Silberhalogenid, umfassend ein Trägermaterial und eine vordere und eine hintere Schichteinheit einer Silberhalogenidemulsion, die jeweils auf einer Oberfläche des Trägermaterials aufgebracht sind, wobei der vordere Schirm angrenzend zu der vorderen Silberhalogenidschicht angeordnet ist und der hintere Schirm angrenzend zu der hinteren Silberhalogenidschicht angeordnet ist und wobei

1) der vordere Schirm einen eine erste Strahlung emittierenden Phosphor umfaßt, und die vordere Silberhalogenidschichteinheit Silberhalogenidkörner umfaßt, die empfindlich gegenüber der ersten Strahlung sind, die durch den vorderen Schirm emittiert wird,
2) der hintere Schirm einen eine zweite Strahlung emittierenden Phosphor umfaßt, und die hintere Silberhalogenidschichteinheit Silberhalogenidkörner umfaßt, die empfindlich gegenüber der zweiten Strahlung sind, die vom hinteren Schirm emittiert wird,
3) die erste Strahlung, die durch den vorderen Schirm emittiert wird, in einem Wellenlängenbereich von nicht aktinischer Strahlung liegt und die zweite Strahlung, die durch den hinteren Schirm emittiert wird, in einem Wellenlängenbereich von aktinischer Strahlung liegt,
4) die erste Strahlung, die durch den vorderen Schirm emittiert wird, eine Wellenlänge aufweist, welche sich von der zweiten Strahlung, die durch den hinteren Schirm emittiert wird, um mindestens 50 nm unterscheidet,
5) die vordere Schichteinheit der Silberhalogenidemulsion im wesentlichen unempfindlich gegenüber der zweiten Strahlung ist, die durch den hinteren Schirm emittiert wird, und
6) die hintere Schichteinheit der Silberhalogenidemulsion im wesentlichen unempfindlich gegenüber der ersten Strahlung ist, die durch den vorderen Schirm emittiert wird,
und wobei der Unterschied im Wellenlängenbereich der ersten und zweiten Strahlung und die Unempfindlichkeit der jeweiligen Schichteinheit einer Silberhalogenidemulsion gegenüber Strahlung. die vom gegenüberliegenden Schirm emittiert wird, derart ist, daß die Kreuzungsbelichtung um mindestens 10 % reduziert wird, wenn sie mit einer symmetrischen Kombination eines Paares von grünes Licht emittierenden Fluoreszenzschirmen und eines doppelt beschichteten radiographischen Elements einer grün sensibilisierten Silberhalogenidemulsion verglichen wird, und

(ii) Entwickeln des Halogenids des radiographischen Silberhalogenidelements dadurch gekennzeichnet. daß die zwei Schichteinheiten der Silberhalogenidemulsion einen Unterschied im mittleren Kontrast von mindestens 0,5 aufweisen, basierend auf Schwärzungsmessungen bei 0,25 und 1,00 über der minimalen Schwärzung. und daß sie einen Unterschied in der Empfindlichkeit von mindestens 0,5 logE aufweisen, gemessen bei einer Schwärzung von 0,5 über der minimalen Schwärzung.

**20.** Verfahren zur Aufzeichnung eines Strahlungsbildes nach Anspruch 19, wobei

a) der vordere Schirm einen nicht aktinisches Licht emittierenden Phosphor und die vordere Silberhalogenidschicht gegenüber der durch den vorderen Schirm emittierten Strahlung spektral sensibilisierte Silberhalogenidkörner umfaßt, und

b) der hintere Schirm einen UV-Strahlung emittierenden Phosphor umfaßt, und die hintere Silberhalogenidschicht spektral nicht sensibilisierte Silberhalogenidkörner umfaßt.

**21.** Verfahren zur Aufzeichnung eines Strahlungsbildes nach Anspruch 19, wobei der vordere Schirm einen grün emittierenden Phosphor umfaßt, dessen spektrale Emission zu mehr als 80 % oberhalb von 480 nm liegt und dessen maximale Emission in dem Wellenlängenbereich von 530 bis 570 nm liegt.

**22.** Verfahren zur Aufzeichnung eines Strahlungsbildes nach Anspruch 19, wobei der vordere Schirm einen grün emittierenden Phosphor der allgemeinen Formel

$$(Ln_{1-a-b}, Tb_a, Tm_b)_2O_2S$$

wobei Ln mindestens ein Seltenerdmetall, ausgewählt aus Lanthan, Gadolinium und Lutetium ist, und a und b Zahlen sind, die den Bedingungen $0{,}0005 \le a \le 0{,}09$ bzw. $0 \le b \le 0{,}01$ gehorchen, oder der allgemeinen Formel

$$(Y_{1-c-a-b}, Ln_c, Tb_a, Tm_b)_2O_2Tb$$

wobei Ln mindestens ein Seltenerdmetall, ausgewählt aus Lanthan, Gadolinium und Lutetium ist, und a, b und c Zahlen sind, die den Bedingungen $0{,}0005 \le a \le 0{,}09$, $0 \le b \le 0{,}01$ bzw. $0{,}65 \le c \le 0{,}95$ gehorchen, umfaßt.

**23.** Verfahren zur Aufzeichnung eines Strahlungsbildes nach Anspruch 19, wobei der vordere Schirm einen Terbium-aktivierten Gadolinium- oder Lanthanoxysulfidphosphor, der im wesentlichen Emissionspeaks bei 487 und 545 nm hat. umfaßt.

**24.** Verfahren zur Aufzeichnung eines Strahlungsbildes nach Anspruch 19, wobei die vordere Silberhalogenidschichteinheit mit spektral sensibilisierenden Farbstoffen der Cyanin- oder Merocyaninfarbstoffe spektral sensibilisierte Silberhalogenidkörner umfäßt.

**25.** Verfahren zur Aufzeichnung eines Strahlungsbildes nach Anspruch 19, wobei die vordere Silberhalogenidschichteinheit mit sensibilisierenden Farbstoffen derart spektral sensibilisierte Silberhalogenidkörner umfaßt, daß diese empfindlich für Licht im Wellenlängenbereich von 530 bis 570 nm sind.

**26.** Verfahren zur Aufzeichnung eines Strahlungsbildes nach Anspruch 19, wobei die vordere Schicht einer Silberhalogenidemulsion mit sensibilisierenden Farbstoffen der folgenden Formel spektral sensibilisierte Silberhalogenidkörner umfaßt;

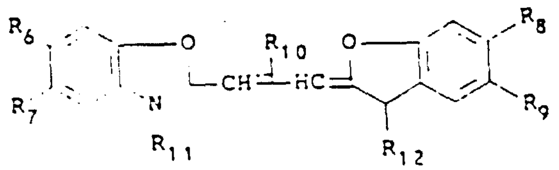

$(X^-)_{n-1}$

wobei $R_{10}$ ein Wasserstoffatom oder ein Alkylrest ist, $R_6$, $R_7$, $R_8$ und $R_9$ jeweils ein Wasserstoffatom, ein Halogenatom, eine Hydroxygruppe, ein Alkoxyrest, eine Aminogruppe, eine Acylaminogruppe, ein Acyloxyrest, ein Alkoxycarbonylrest, ein Alkylrest, ein Alkoxycarbonylaminorest oder ein Arylrest sind, oder $R_6$ und $R_7$ bzw. $R_8$ und $R_9$ zusammen die Atome sein können. die notwendig sind. um einen Benzolring zu vervollständigen, $R_{11}$ und $R_{12}$ jeweils ein Alkylrest, ein Hydroxyalkylrest, ein Acetoxyalkylrest, ein Alkoxyalkylrest, eine Carbonsäuregruppe, die einen Alkylrest enthält, eine Sulfogruppe, die einen Alkylrest enthält, eine Benzylgruppe, eine Phenethylgruppe oder eine Vinylmethylgruppe sind, $X^-$ ein Säureanion und n 1 oder 2 ist.

**27.** Verfahren zur Aufzeichnung eines Strahlungsbildes nach Anspruch 19, wobei der hintere Schirm einen UV-emittierenden Phosphor umfaßt, dessen spektrale Emission zu mehr als 80 % unter 410 nm liegt und dessen Maximum an Emission im Wellenlängenbereich von 300 bis 360 nm liegt.

**28.** Verfahren zur Aufzeichnung eines Strahlungsbildes nach Anspruch 19, wobei der hintere Schirm einen UV-emittierenden Phosphor umfaßt, ausgewählt aus Blei- oder Lanthan-aktivierten Bariumsulfatphosphoren, Bariumfluorhalogenidphosphoren, Blei-aktivierten Bariumsilikatphosphoren, Gadolinium-aktivierten Yttriumoxidphosphoren, Bariumfluoridphosphoren und Alkalimetall-aktivierten Seltenerdmetall-Niobat- oder Tantalatphosphoren.

**29.** Verfahren zur Aufzeichnung eines Strahlungsbildes nach Anspruch 19, wobei der hintere Schirm einen UV-emittierenden Phosphor gemäß der allgemeinen Formel umfaßt:

$$(Y_{1-2/3x-1/3y}, Sr_y, Li_z)\ TaO_4$$

wobei x und y Zählen sind, die die Bedingungen $10^{-5} \leq x \leq 1$ und $10^{-4} \leq y < 0,1$ erfüllen.

**30.** Verfahren zur Aufzeichnung eines Strahlungsbildes nach Anspruch 19, wobei die hintere Silberhalogenidschichteinheit chemisch sensibilisierte und spektral nicht sensibilisierte Silberbromiodidkörner umfaßt.

**31.** Silberhalogenid enthaltendes radiographisches Element, umfassend ein Trägermaterial und eine vordere und eine hintere Schichteinheit einer Silberhalogenidemulsion, die jeweils auf einer Oberfläche des Trägermaterials aufgebracht sind, dadurch gekennzeichnet, daß die vordere Schichteinheit der Silberhalogenidemulsion Silberhalogenidkörner umfaßt, die empfindlich gegenüber dem Wellenlängenbereich einer nicht aktinischen Strahlung sind und daß die hintere Schichteinheit der Silberhalogenidemulsion Silberhalogenidkörner umfaßt, die UV- oder blauempfindlich sind, dadurch gekennzeichnet, daß die zwei Schichteinheiten der Silberhalogenidemulsion einen Unterschied im mittleren Kontrast von mindestens 0,5 aufweisen, basierend auf Schwärzungsmessungen bei 0,25 und 1,00 über der minimalen Schwärzung, und daß sie einen Unterschied in der Empfindlichkeit von mindestens 0,5 logE aufweisen. gemessen bei einer Schwärzung von 0,5 über der minimalen Schwärzung.

## Revendications

**1.** Une combinaison d'éléments photosensibles destinés à être utilisés en radiographie, comportant deux écrans fluorescents aux rayons X, avant et arrière, séparés, et un élément radiographique en halogénure d'argent comportant un support basal et des systèmes de couche en émulsion d'halogénure d'argent, avant et arrière, chacun appliqué en revêtement sur une surface dudit support, ledit écran avant étant agencé adjacent audit système avant de couches d'émulsion en halogénure d'argent, tandis que ledit écran arrière est agencé adjacent audit système arrière de couche d'émulsion en halogénure d'argent, et dans lequel :

1) ledit écran avant comporte une substance fluorescente émettant une première radiation et ledit système avant de couche d'émulsion en halogénure d'argent comporte des grains d'halogénure d'argent sensibles à ladite première radiation émise par ledit écran avant,
2) ledit écran arrière comporte une substance fluorescente émettant une seconde radiation et ledit système arrière de couche d'émulsion en halogénure d'argent comporte des grains d'halogénure d'argent sensibles à ladite seconde radiation émise par ledit écran arrière,
3) ladite première radiation émise par ledit écran est dans une première région de longueur d'onde du spectre électromagnétique et ladite seconde radiation émise par ledit écran est dans une seconde région de longueur d'onde du spectre électromagnétique.
4) ledit système avant de couche d'émulsion en halogénure d'argent est essentiellement insensible à ladite seconde radiation émise par ledit écran arrière, et
5) ledit système arrière de couche d'émulsion en halogénure d'argent est essentiellement insensible à ladite première radiation émise par ledit écran avant,

caractérisé en ce que les deux systèmes de couche d'émulsion en halogénure d'argent ont une différence de contraste moyen, en se basant sur les mesures de densité à 0,25 et 1,00 au-dessus de la densité minimale, d'au moins 0,5, et une différence de vitesse mesurée à une densité 0,5 au-dessus de la densité minimale, d'au moins 0,5 logE.

2. La combinaison de la revendication 1, dans laquelle

   a) ledit écran avant comprend un composé fluorescent émettant une lumière non-actinique et ladite couche avant en halogénure d'argent comprend des grains d'halogénure d'argent spectralement sensibilisés à la radiation émise par ledit écran avant, et
   b) ledit écran arrière comprend un composé fluorescent émettant une lumière ultraviolette et ladite couche arrière en halogénure d'argent comprend des grains d'halogénure d'argent, spectralement insensibilisés.

3. La combinaison de la revendication 1, dans laquelle ledit écran avant comprend un composé fluorescent émettant essentiellement dans le vert.

4. La combinaison de la revendication 1, dans laquelle ledit écran avant comporte un composé fluorescent émettant dans le vert, ayant plus de 80 % de son émission spectrale au-dessus de 480 nm et son maximum d'émissioin dans la gamme de longueurs d'onde de 530 à 570 nm.

5. La combinaison de la revendication 1, dans laquelle ledit écran avant comporte un composé fluorescent émettant dans le verre, représenté par la formule générale

$$(Ln_{1\text{-}a\text{-}b}, Tb_a, Tm_b)_2O_2S$$

dans laquelle Ln est au moins un élément des terres rares choisi parmi le lanthane, le gadolinium et le lutétium, et a et b sont des nombres tels qu'ils satisfassent aux conditions $0,0005 \leq a \leq 0,09$ et $0 \leq b \leq 0,01$, respectivement, ou par la formule générale:

$$(Y_{1\text{-}c\text{-}a\text{-}b}, Ln_c, Tb_a, Tm_b)_2O_2S$$

dans laquelle Ln est au moins un élément de terres rares choisi parmi le lanthane, le gadolinium et le lutétium, et a, b et c sont des nombres tels qu'ils satisfassent aux conditions $0,005 \leq a \leq 0,09$, $0 \leq b \leq 0,01$ et $0,65 \leq c \leq 0,95$, respectivement.

6. La combinaison de la revendication 1, dans laquelle ledit écran avant comprend un composé fluorescent du type oxysulfure de gadolinium ou de lanthane, activé par du terbium, ayant essentiellement des pics d'émission à 487 et 545 nm.

7. La combinaison de la revendication 1, dans laquelle ledit système de couche avant en halogénure d'argent comporte des grains d'halogénure d'argent spectralement sensibilisés avec des couleurs spectrales sensibilisantes du type colorant cyanine ou mérocyanine.

8. La combinaison de la revendication 4, dans laquelle ledit système de couche avant en halogénure d'argent comporte des grains d'halogénure d'argent spectralement sensibilisés avec des couleurs sensibilisantes de sorte qu'il est sensible pour une lumière dans la gamme de longueurs d'onde de 530 à 570 nm.

9. La combinaison de la revendication 4, dans laquelle ledit système de couche avant en émulsion d'halogénure d'argent comporte des grains d'halogénure d'argent spectralement sensibilisés avec des colorants sensibilisants représentés par la formule générale

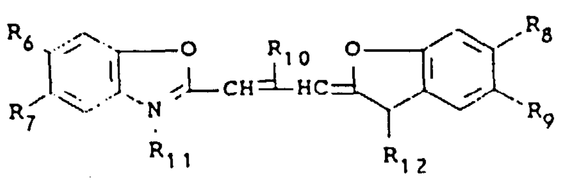

$(X^-)_{n-1}$

dans laquelle $R_{10}$ représente un atome d'hydrogène ou un groupe alkyle, $R_6$, $R_7$, $R_8$ et $R_9$ représentent chacun un atome d'hydrogène, un atome d'halogène, un groupe hydroxyle, un groupe alcoxy, un groupe amino, un groupe

acylamino, un groupe acyloxy, un groupe alcoxycarbonyle, un groupe alkyle, un groupe alcoxycarbonylamino ou un groupe aryle, ou bien, conjointement, $R_6$ et $R_7$ et, respectivement, $R_8$ et $R_9$ peuvent être les atomes nécessaires pour compléter un cycle benzénique, $R_{11}$ et $R_{12}$ représentent chacun un groupe alkyle, un groupe hydroxyalkyle, un groupe acétoxyalkyle, un groupe alcoxyalkyle, un groupe alkyle renfermant un groupe carboxyle, un groupe alkyle renfermant un groupe sulfo, un groupe benzyle, un groupe phénéthyle ou un groupe vinylméthyle, $X^-$ représente un anion acide et n représente 1 ou 2.

**10.** La combinaison de la revendication 2, dans laquelle ledit écran arrière comporte un composé fluorescent émettant une lumière ultraviolette, ayant plus de 80 % de son spectre d'émission en dessous de 410 nm et son maximum d'émission dans la gamme de longueurs d'onde de 300 à 360 nm.

**11.** La combinaison de la revendication 2, dans laquelle l'écran arrière comporte un composé fluorescent émettant une lumière ultraviolette, choisi dans la classe constituée des composés fluorescents du type sulfate de baryum activé par du plomb ou du lanthane, des composés fluorescents du type fluorohalogénure de baryum, des composés fluorescents du type silicate de baryum activé par du plomb, des composés fluorescents du type oxyde d'yttrium activé par du gadolinium, des composés fluorescents du type fluorure de baryum et des composés fluorescents du type niobate ou tantalate des terres rares, activé par un métal alcalin.

**12.** La combinaison de la revendication 2, dans laquelle ledit écran arrière comporte un composé fluorescent émettant une lumière ultraviolette, correspondant à la formule générale

$$(Y_{1-2/3x-1/3y}, Sr_x, Li_y)\, TaO_4$$

dans laquelle x et y sont des nombres tels qu'ils satisfont aux conditions $10^{-5} \leq x \leq 1$ et $10^{-4} \leq y \leq 0,1$

**13.** La combinaison de la revendication 2, dans laquelle ledit système de couche arrière d'halogénure d'argent comporte des grains de bromoiodure d'argent chimiquement sensibilisés et spectralement insensibilisés.

**14.** La combinaison de la revendication 1, dans laquelle le premier et le second systèmes de couche d'émulsion présentent une différence moyenne de contraste dans la gamme de 0,5 à 2,0.

**15.** La combinaison de la revendication 14, dans laquelle le premier et le second systèmes de couche d'émulsion présentent une différence moyenne de contraste dans la gamme de 1,0 à 1,5.

**16.** La combinaison de la revendication 1, dans laquelle le premier et le second systèmes de couche d'émulsion présentent une différence de vitesse dans la gamme de 0,5 à 2,0 logE.

**17.** La combinaison de la revendication 16, dans laquelle le premier et le second systèmes de couche d'émulsion présentent une différence de vitesse dans la gamme de 0,6 à 1,2 logE.

**18.** La combinaison de la revendication 1, dans laquelle le système d'émulsion en halogénure d'argent de contraste inférieur en moyenne présente une vitesse qui est supérieure à celle du système d'émulsion d'halogénure d'argent de contraste supérieur en moyenne.

**19.** Un procédé pour enregistrer une image obtenue par rayonnement, comportant les étapes de (i) exposer en une forme d'image, à un rayonnement X, une combinaison d'éléments photosensibles destinés à être utilisés en radiographie, comportant deux écrans fluorescents aux rayons X, avant et arrière, séparés et un élément radiographique en halogénure d'argent comportant un support basal et des systèmes de couche en émulsion d'halogénure d'argent, avant et arrière, chacun appliqué en revêtement sur une surface dudit support, ledit écran avant étant agencé adjacent audit système avant de couches d'émulsion en halogénure d'argent, tandis que ledit écran arrière est agencé adjacent audit système arrière de couche d'émulsion en halogénure d'argent, et dans lequel :

1) ledit écran avant comporte une substance fluorescente émettant une première radiation et ledit système avant de couche d'émulsion en halogénure d'argent comporte des grains d'halogénure d'argent sensibles à ladite première radiation émise par ledit écran avant,
2) ledit écran arrière comporte une substance fluorescente émettant une seconde radiation et ledit système arrière de couche d'émulsion en halogénure d'argent comporte des grains d'halogénure d'argent sensibles à

ladite seconde radiation émise par ledit écran arrière,
3) ladite première radiation émise par ledit écran avant se trouve dans une région de longueur d'onde de rayonnement non actinique tandis que ladite seconde radiation émise par ledit écran arrière se trouve dans une région de longueur d'onde de rayonnement actinique,
4) ladite première radiation émise par ledit écran avant présente une longueur d'onde qui diffère de ladite seconde radiation émise par ledit écran arrière d'au moins 50 nm,
5) ledit système avant de couche d'émulsion en halogénure d'argent est essentiellement insensible à ladite seconde radiation émise par ledit écran arrière, et
6) ledit système arrière de couche d'émulsion en halogénure d'argent est essentiellement insensible à ladite première radiation émise par ledit écran avant,

la différence dans la région de longueur d'onde de ladite première et seconde radiations et l'inensibilité de chaque système de couche d'émulsion en halogénure d'argent à la radiation émise par l'écran opposé étant telle qu'elle réduit l'exposition de chevauchement d'au moins 10 %, par comparaison avec une combinaison symétrique d'une paire d'écrans fluorescents émettant de la lumière verte et un élément radiographique à double revêtement d'émulsion en halogénure d'argent, sensibilisé au vert, et (ii) développer ledit élément radiographique en halogénure d'argent

caractérisé en ce que les deux systèmes de couche d'émulsion en halogénure d'argent ont une différence de contraste moyen, en se basant sur les mesures de densité à 0,25 et 1,00 au-dessus de la densité minimale, d'au moins 0,5, une différence de vitesse mesurée à une densité 0,5 au-dessus de la densité minimale, d'au moins 0,5 logE.

**20.** Le procédé pour enregistrer une image obtenue par un rayonnement selon la revendication 19, dans lequel

a) ledit écran avant comprend un composé fluorescent émettant une lumière non-actinique et ladite couche avant en halogénure d'argent comprend des grains d'halogénure d'argent spectralement sensibilisés à la radiation émise par ledit écran avant, et
b) ledit écran arrière comprend un composé fluorescent émettant une lumière ultraviolette et ladite couche arrière en halogénure d'argent comprend des grains d'halogénure d'argent, spectralement insensibilisés.

**21.** Le procédé pour enregistrer une image obtenue par un rayonnement, selon la revendication 19, dans lequel ledit écran avant comporte un composé fluorescent émettant dans le vert, ayant plus de 80 % de son émission spectrale au-dessus de 480 nm et son maximum d'émissioin dans la gamme de longueurs d'onde de 530 à 570 nm.

**22.** Le procédé pour enregistrer une image obtenue par rayonnement, selon la revendication 19, dans lequel ledit écran avant comporte un composé fluorescent émettant dans le vert, représenté par la formule générale

$$(Ln_{1\text{-}a\text{-}b}, Tb_a, Tm_b)_2O_2S$$

dans laquelle Ln est au moins un élément des terres rares choisi parmi le lanthane, le gadolinium et le lutétium, et a et b sont des nombres tels qu'ils satisfassent aux conditions $0{,}0005 \leq a \leq 0{,}09$ et $0 \leq b \leq 0{,}01$, respectivement, représentées par la formule générale :

$$(Y_{1\text{-}c\text{-}a\text{-}b}, Ln_c, Tb_a, Tm_b)_2O_2S$$

dans laquelle Ln est au moins un élément de terres rares choisi parmi le lanthane, le gadolinium et le lutétium, et a, b et c sont des nombres tels qu'ils satisfassent aux conditions $0{,}0005 \leq a \leq 0{,}09$, $0 \leq b \leq 0{,}01$ et $0{,}65 \leq c \leq 0{,}95$, respectivement.

**23.** Le procédé pour enregistrer une image obtenue par un rayonnement selon la revendication 19, dans lequel ledit écran avant comprend un composé fluorescent du type oxysulfure de gadolinium ou de lanthane, activé par du terbium, ayant essentiellement des pics d'émission à 487 et 545 nm.

**24.** Le procédé pour enregistrer une image obtenue par un rayonnement, selon la revendication 19, dans lequel ledit système de couche avant en halogénure d'argent comporte des grains d'halogénure d'argent spectralement sensibilisés avec des couleurs spectrales sensibilisantes du type colorant cyanine ou mérocyanine.

**25.** Le procédé pour enregistrer une image obtenue par un rayonnement, selon la revendication 19, dans lequel ledit système de couche avant en halogénure d'argent comporte des grains d'halogénure d'argent spectralement sensibilisés avec des couleurs sensibilisantes de sorte qu'il est sensible pour une lumière dans la gamme de longueurs d'onde de 530 à 570 nm.

**26.** Le procédé pour enregistrer une image obtenue par un rayonnement, selon la revendication 19, dans lequel ledit système de couche avant en émulsion d'halogénure d'argent comporte des grains d'halogénure d'argent spectralement sensibilisés avec des couleurs sensibilisantes représentées par la formule générale

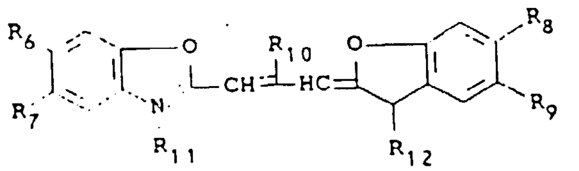

$(X^-)_{n-1}$

dans laquelle $R_{10}$ représente un atome d'hydrogène ou un groupe alkyle, $R_6$, $R_7$, $R_8$ et $R_9$ représentent chacun un atome d'hydrogène, un atome d'halogène, un groupe hydroxyle, un groupe alcoxy, un groupe amino, un groupe acylamino, un groupe acyloxy, un groupe alcoxycarbonyle, un groupe alkyle, un groupe alcoxycarbonylamino ou un groupe aryle, ou bien, conjointement, $R_6$ et $R_7$ et respectivement $R_8$ et $R_9$ peuvent être les atomes nécessaires pour compléter un cycle benzénique, $R_{11}$ et $R_{12}$ représentent chacun un groupe alkyle, un groupe hydroxyalkyle, un groupe acétoxyalkyle, un groupe alcoxyalkyle, un groupe alkyle renfermant un groupe carboxyle, un groupe alkyle renfermant un groupe sulfo, un groupe benzyle, un groupe phénéthyle ou un groupe vinylméthyle, $X^-$ représente un anion acide et n représente 1 ou 2.

**27.** Le procédé pour enregistrer une image obtenue par un rayonnement, selon la revendication 19, dans lequel ledit écran arrière comporte un composé fluorescent émettant une lumière ultraviolette, ayant plus de 80 % de son spectre d'émission en dessous de 410 nm et son maximum d'émission dans la gamme de longueurs d'onde de 300 à 360 nm.

**28.** Le procédé pour enregistrer une image obtenue par un rayonnement, selon la revendication 19, dans lequel l'écran arrière comporte un composé fluorescent émettant une lumière ultraviolette, choisi dans la classe constituée des composés fluorescents du type sulfate de baryum activé par du plomb ou du lanthane, des composés fluorescents du type fluorohalogénure de baryum, des composés fluorescents du type silicate de baryum activé par du plomb, des composé fluorescents du type oxyde d'yttrium activé par du gadolinium, des composés fluorescents du type fluorure de baryum et des composés fluorescents du type niobate ou tantalate des terres rares, activé par un métal alcalin.

**29.** Le procédé pour enregistrer une image obtenue par rayonnement, selon la revendication 19, dans lequel ledit écran arrière comporte un composé fluorescent émettant une lumière ultraviolette, correspondant à la formule générale

$$(Y_{1-2/3x-1/3y}, Sr_x, Li_y)\ TaO_4$$

dans laquelle x et y sont des nombres tels qu'ils satisfont aux conditions $10^{-5} \leq x \leq 1$ et $10^{-4} \leq y \leq 0{,}1$

**30.** Le procédé pour enregistrer une image obtenue par un rayonnement, selon la revendication 19, dans lequel ledit système de couche arrière d'halogénure d'argent comporte des grains de bromoiodure d'argent chimiquement sensibilisés et spectralement insensibilisés.

**31.** Un élément radiographique à l'halogénure d'argent, comportant un support basal et des systèmes de couche, avant et arrière, chacune appliquée en revêtement sur une face dudit support, caractérisé en ce que ledit système de couche avant en émulsion d'halogénure d'argent comporte des grains d'halogénure d'argent sensibles à une région de longueur d'onde de radiation actinique, et ledit système de couche arrière en émulsion d'halogénure d'argent comporte des grains d'halogénure d'argent sensibles à l'ultraviolet ou au bleu, caractérisé en ce que les deux systèmes de couches d'émulsion en halogénure d'argent ont une différence de contraste moyen, en se

basant sur des mesures de densité à 0,25 et 1,00 au-dessus de la densité minimale, d'au moins 0,5, et une différence de vitesse, mesurée pour une densité de 0,5 au-dessus de la densité minimale, d'au moins 0,5 logE.

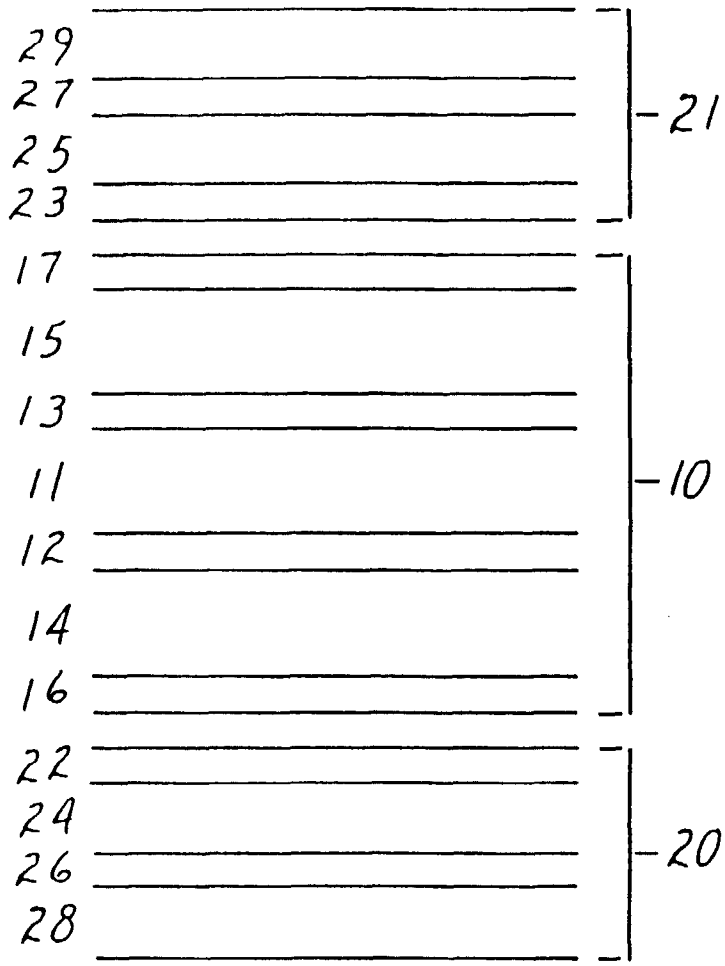


FIG. 1

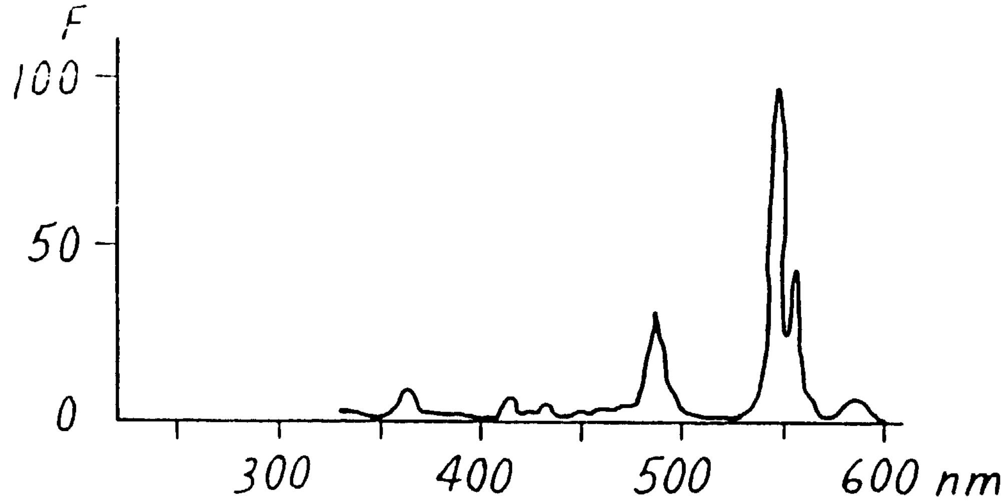


FIG. 2

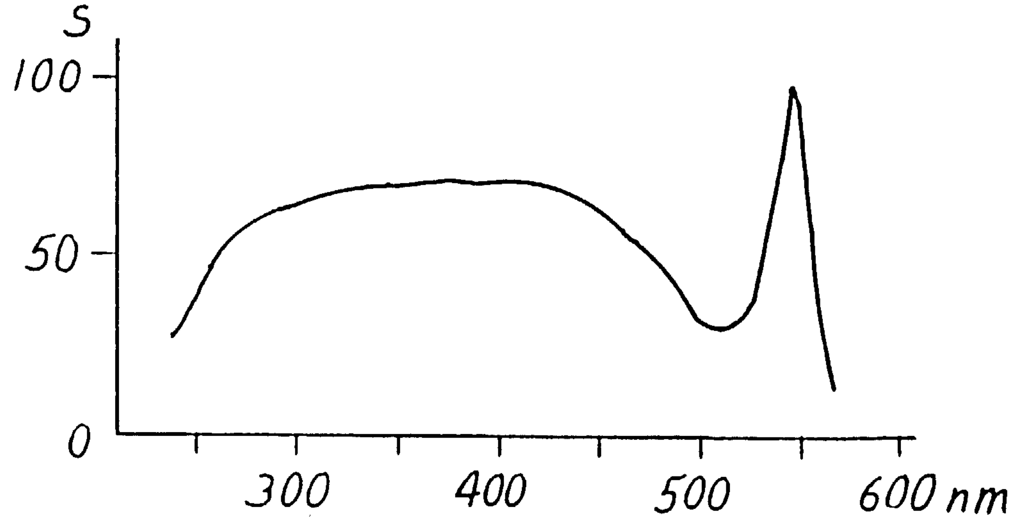


FIG. 3

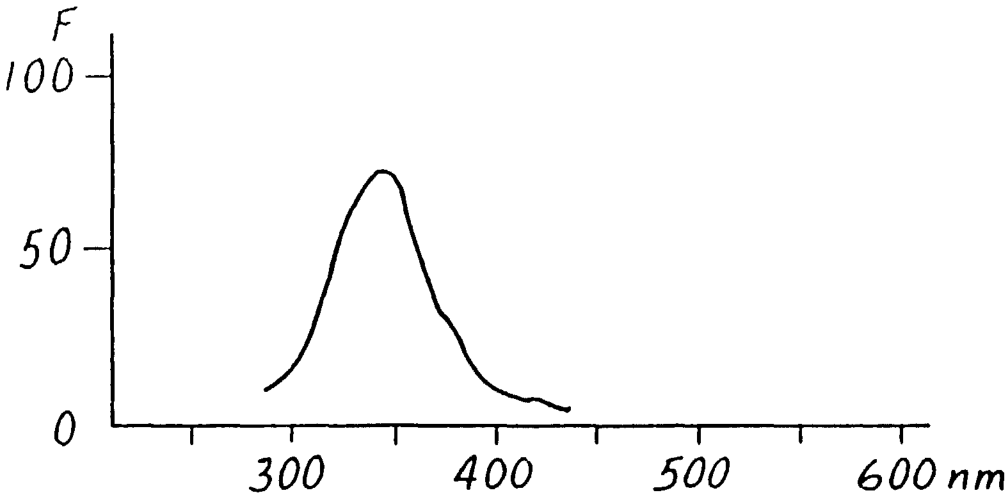


FIG. 4

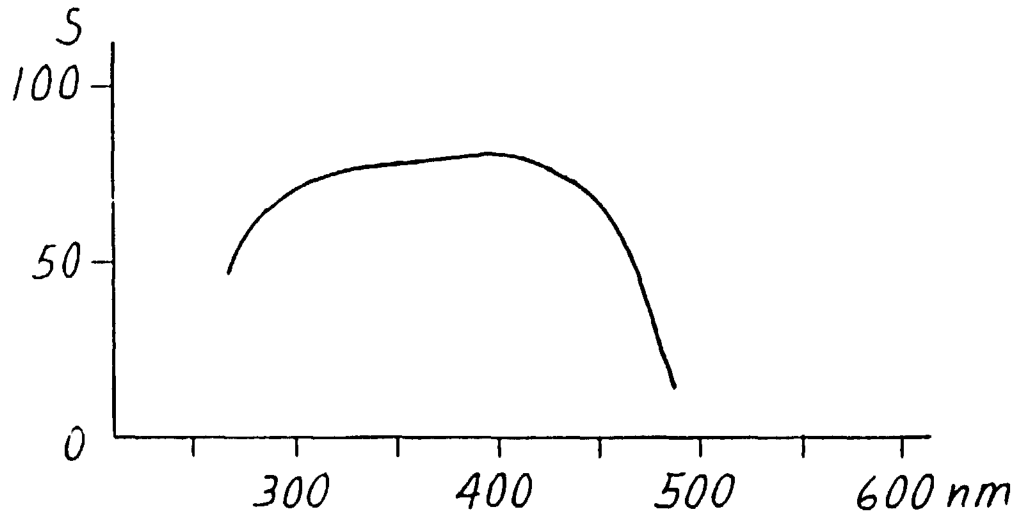


FIG. 5

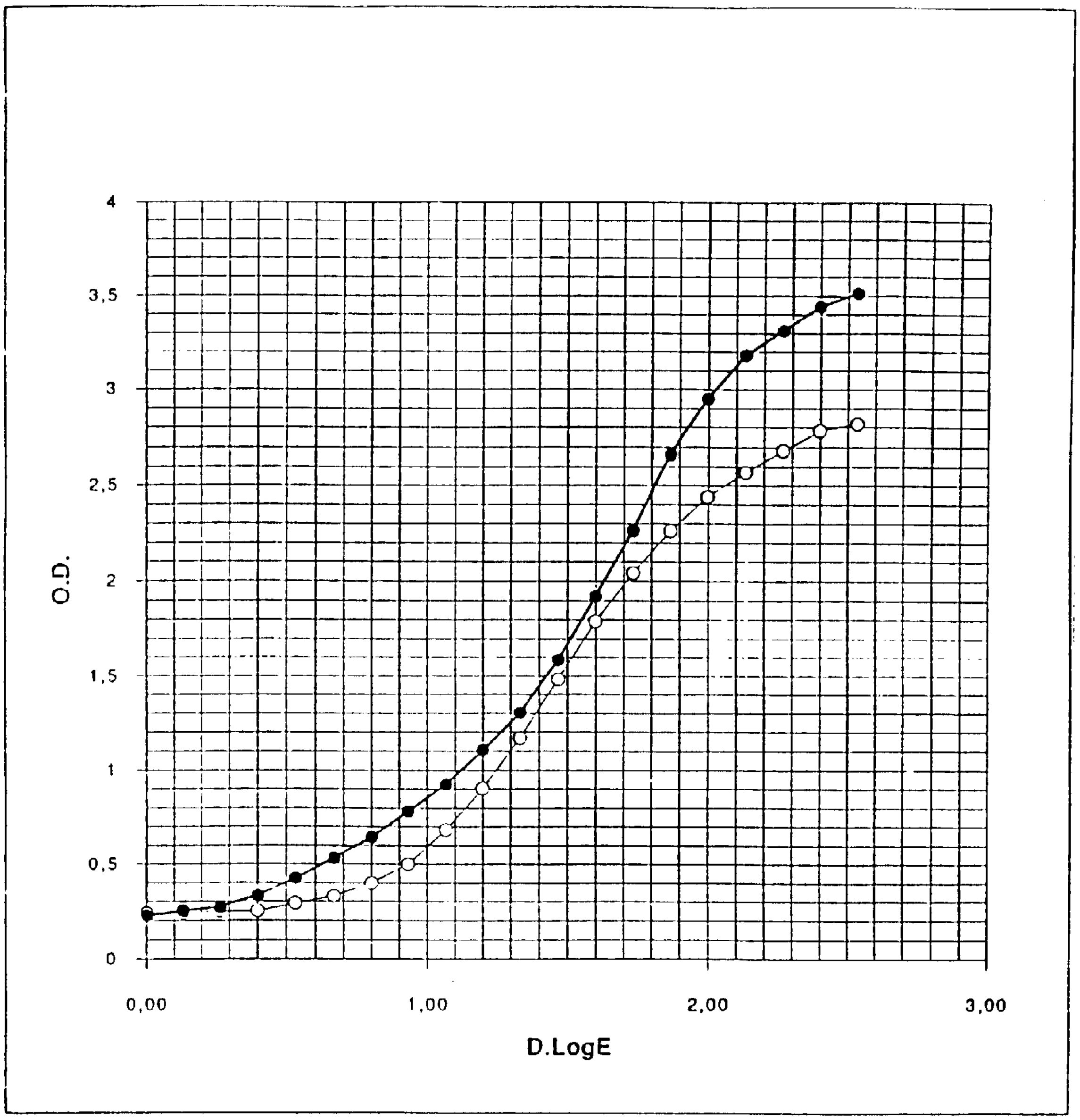


FIG. 6

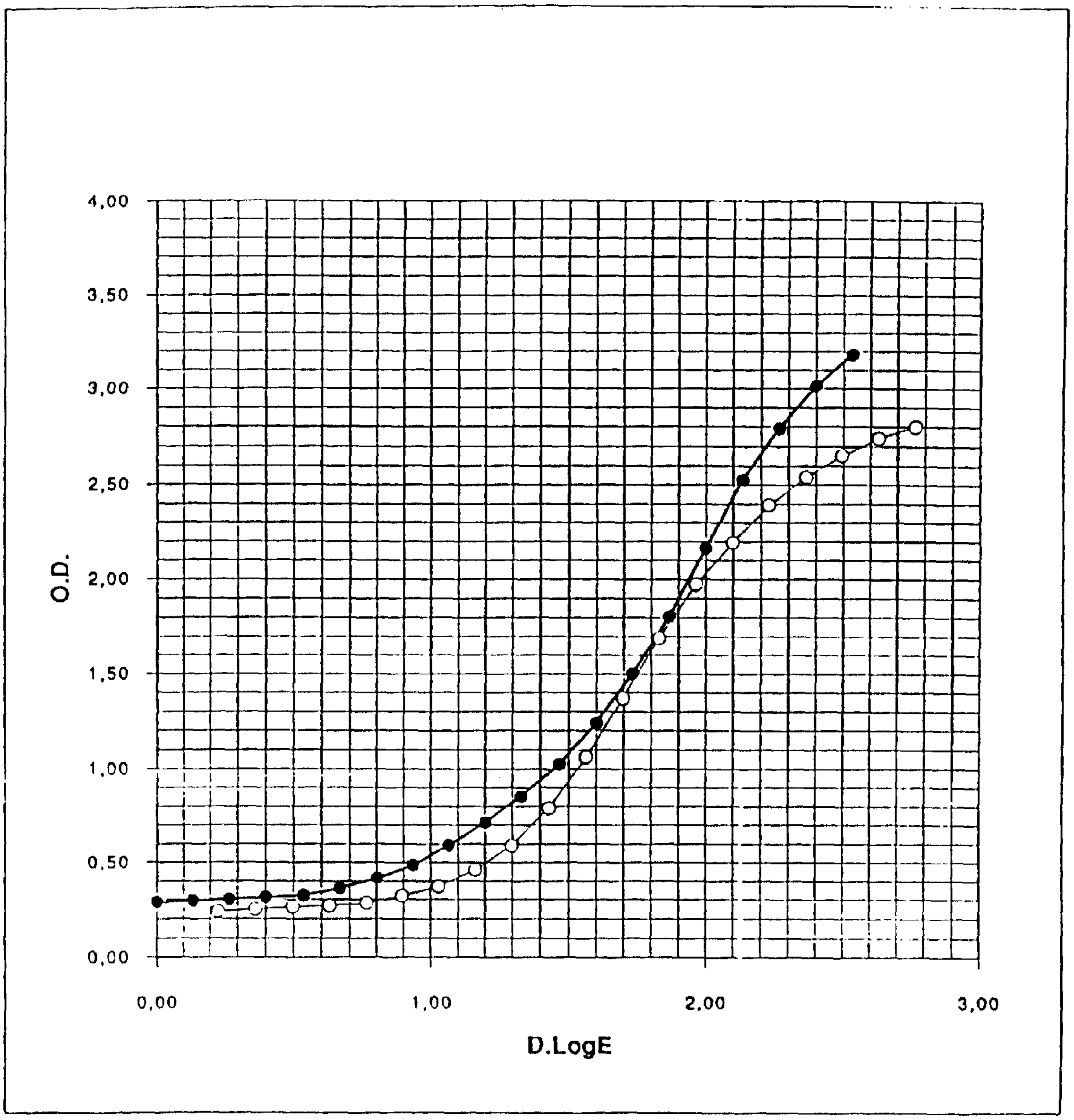


FIG. 7